# EUROPEAN PATENT SPECIFICATION

(11) **EP 2 098 411 B1**
(45) Date of publication and mention of the grant of the patent: **15.06.2011**
(21) Application number: 09003216.0
(22) Date of filing: 05.03.2009
(51) Int. Cl.: B60R 9/00, B62D 25/12, B60J 7/22

(54) **Baggage compartment structure of a vehicle, vehicle equipped therewith and method of forming a baggage compartment structure**
Gepäckraumstruktur eines Fahrzeugs, damit ausgestattetes Fahrzeug und Verfahren zur Bildung einer Gepäckraumstruktur
Structure de compartiment à bagages d'un véhicule, véhicule étant équipé et procédé de formation d'une structure de compartiment à bagages

(30) Priority: 07.03.2008 JP 2008057469; 07.03.2008 JP 2008057502; 07.03.2008 JP 2008057430
(43) Date of publication of application: 09.09.2009
(73) Proprietor: Mazda Motor Corporation, Aki-gun Hiroshima 730-8670 (JP)
(72) Inventor: Tohda, Isao, Hiroshima 730-8670 (JP); Asada, Kenji, Hiroshima 730-8670 (JP); Mori, Shigeyuki, Hiroshima 730-8670 (JP)
(74) Representative: Müller-Boré & Partner Patentanwälte

(56) References cited:
- DE-A1- 3 724 273
- US-B1- 6 769 731

## Description

The present invention relates to a baggage compartment structure of a vehicle, a vehicle equipped therewith and a method of forming a baggage compartment structure. A vehicle comprises a trunk room which is provided at a rear portion of a vehicle body so that an opening formed at an upper face thereof is configured to be closed with a trunk lid.

For example, a sedan type of vehicle or a sports car type of vehicle have the trunk room which is provided at the rear portion of the vehicle body so that the opening formed at the upper face thereof can be closed with the trunk lid. In these types of vehicle, there is a case in which the size of the trunk room (volume, length, width, depth, etc.) may not be made large enough to store a large-sized baggage from a design or vehicle size perspective, for example. Meanwhile, the utility function of loading the large-sized baggage, such as a bicycle, has been recently demanded to even these types of vehicle for leisure or the like.

Japanese Patent Laid-Open Publication No. 11-245735, for example, discloses a baggage loading structure of the above-described type of vehicle, in which there are provided a pair of right and left rails and a support member for these rails are provided from a vehicle roof to an upper portion of a vehicle-body rear portion so as to load a bicycle as a large-sized baggage. Herein, a truck may be prepared so as to move on the rails by holding the bicycle on it, so that the bicycle can be properly loaded on the vehicle roof.

According to the baggage loading structure disclosed in the above-described patent publication, the truck may be necessary in addition to providing the rails provided from the vehicle roof to the upper portion of the vehicle-body rear portion, so the structure would become rather large and complex. Further, the truck may be designed only for the bicycle, so that another truck may be necessary for loading another kind of baggage.

Further, while the above-described patent document contains the description that the rails may be provided detachably, since the structure is rather large and complex as described above, attachment or detachment of the rails may require a considerably long time. Thus, the rails may be considered as parts which are substantially attached all the time. Therefore, the vehicle design may be damaged improperly.

US 6 769 731 B1, which describes the preamble to the independent claims discloses a cargo cover having hinged rails provided at a top surface of first and second panels.

An object of the present invention is to provide a baggage compartment structure of a vehicle which can properly load various types of large-sized baggage without having the large and complex structure and damaging the vehicle design improperly.

The object is solved by the features of the independent claims. Preferred embodiments of the present invention are subject of the dependent claims.

According to the present invention, there is provided a baggage compartment structure of a vehicle, which comprises a trunk room having an opening formed at an upper face thereof and configured to be closed with a trunk lid, wherein said trunk lid is provided so as to rotate around an end portion thereof in such a manner that a back face, lower side or inner face thereof in an open state faces substantially upward, wherein a baggage fixing means is provided and is operative to fix a baggage in such a manner that a space above the trunk lid which is positioned in a specified open state by means of a support means operative to support the trunk lid in the open state and the opening of the trunk room is used as a loading space of the baggage. Accordingly, an upper side or outer face of the trunk lid in the fully open condition faces substantially downward.

According to a preferred embodiment of the present invention, there is provided a baggage compartment structure of a vehicle, which comprises a trunk room which is preferably provided at a rear portion of a vehicle body so that an opening formed at an upper face thereof is configured to be closed with a trunk lid, wherein the trunk lid is provided so as to rotate around a front end portion thereof in such a manner that a back face, lower side or inner face thereof in an open state faces substantially upward and there is preferably provided a support means operative to support the trunk lid in the open state. Accordingly, an upper side or outer face of the trunk lid in the fully open condition faces substantially downward.

According to the above-described present invention, by rotating the trunk lid around its front end portion in such a manner that the back face of the trunk lid in the open state faces substantially upward and by supporting the trunk lid, the baggage can be loaded by using the space inside and above the trunk room. For example, a baggage with the height which is greater than the depth of the trunk room or a baggage, such as a plant, having an upper portion with the longitudinal width which is greater than the opening of the trunk room can be loaded properly. Further, if a baggage fixing means, which will be described below, is used, a baggage like the bicycle can be loaded by using the space above the trunk lid and the opening of the trunk room. That is, the various types of large-sized baggage can be properly loaded without having the large and complex structure and damaging the vehicle design improperly. Further, since the trunk lid is supported by the support means in its open state, the trunk lid can be properly prevented from fluttering due to the vehicle vibration and thereby any improper influence to the vehicle body may be prevented.

According to an embodiment of the present invention, said baggage fixing means is fixedly or detachably provided at a specified position which enables the baggage fixing means to be located inside the trunk room when the opening of the trunk room is closed with the trunk lid. Thereby, since the baggage fixing means is provided so as to fix the baggage in such a manner that the space above the trunk lid and the opening of the trunk room is used as the loading space of the baggage fixed, the large-scaled baggage like the bicycle or a surfboard can be loaded by using the space above the trunk lid and the opening of the trunk room. Herein, since the baggage fixing means is fixedly or detachably provided at the specified position which enables the baggage fixing means to be located inside the trunk room when the opening of the trunk room is closed with the trunk lid, it is not viewed from the outside of the vehicle when the trunk lid is closed. Accordingly, the fine view of the vehicle may not deteriorate. Further, in a case in which the baggage fixing means is detachably provided, the space inside the trunk room can be properly used by removing the baggage fixing means when the trunk lid is closed. Also, various types of fixing means may be applied, and various types of baggage may be loaded accordingly.

According to another embodiment of the present invention, a storage portion of the trunk room is comprised of a watertight storage-container member with water-resisting qualities. Thereby, even if the vehicle travels with the trunk lid open when it rains, the rain can stay properly in the storage-container member. Accordingly, the inside of the trunk room or panels which form the inner face of the vehicle body can be properly protected from the rainwater.

According to another embodiment of the present invention, a drain member to drain a liquid staying in the storage-container member is provided at the storage-container member. Thereby, the rainwater or the like which stay in the storage-container member can be drained easily. Herein, if the storage-container member is provided detachably to the trunk room, the liquid staying in it can be drained outside the trunk room.

According to another embodiment of the present invention, the storage-container member is so deep that a bottom thereof is located close to a lower face portion of the vehicle body. Thereby, the tall baggage can be stored stably without its projecting upward improperly.

According to another embodiment of the present invention, a lid to partition an inside space of the storage-container member into an upper side and a bottom side is provided at the storage-container member. Thereby, any thing which requires its privacy may be stored in the space of the bottom side of the storage-container member below the lid, so that the thing can be prevented from being viewed from the outside by the lid even when the trunk lid is open, thereby protecting the privacy of the thing. Further, articles stored in the space of the bottom side of the storage-container member can be prevented from being scattered in the air while the vehicle travels with the trunk lid open.

According to another embodiment of the present invention, a front space to store a baggage therein is provided at a front portion of the storage-container member, and a lid to partition the space from an inside space of the storage-container member is provided at the storage-container member. Thereby, any thing which requires its privacy may be stored in the front space at the front portion of the storage-container member, so that the thing can be prevented from being viewed from the outside by the lid even when the trunk lid is open, thereby protecting the privacy of the thing. Further, articles stored in the front space at the front portion of the storage-container member can be prevented from being scattered in the air while the vehicle travels with the trunk lid open.

According to another embodiment of the present invention, at the storage-container member is provided a deformation promoting means operative to promote deformation of the storage-container member substantially in a longitudinal direction of the vehicle body when a specified load is applied to the storage-container member substantially in the longitudinal direction of the vehicle body. Thereby, it can be properly restrained that the impact load is applied to the vehicle compartment which is provided in front of the trunk room at the vehicle rear collision or the like. Accordingly, the safety of the passenger in the vehicle compartment can be improved.

According to another embodiment of the present invention, the storage-container member is made from resin. Thereby, the control of the above-described specified load can be easily conducted by adjusting the thickness or the like of the resin member.

According to another embodiment of the present invention, the deformation promoting means is configured to deform in a bellows shape in the longitudinal direction of the vehicle body when the specified load is applied to the storage-container member substantially in the longitudinal direction of the vehicle body. Thereby, the impact load can be absorbed effectively. Accordingly, it can be properly restrained that the impact load is applied to the vehicle compartment. Further, the control of the specified load can be easily conducted by adjusting the number of bellows, the depth of bellows and the like.

Herein, the storage-container member stores various things in it, so its inside may become dirty easily. Accordingly, it may be preferable that the member be removed easily for its cleaning. Therefore, the storage-container member may be possibly configured to be merely inserted into the recess portion of the vehicle body from above, without using bolts or the like. In this case, however, there is a concern that the storage-container member would be removed out of the vehicle improperly when the impact load is applied to the vehicle body at the state of the trunk lid open.

According to another embodiment of the present invention, the storage-container member is inserted into a recess portion which is provided at the vehicle body from above, engagement portions which engage with each other are preferably provided at the storage-container member and the vehicle body, and at the storage-container member is preferably provided an engagement releasing means operative to release an engagement of the engagement portions with a manual operation. Thereby, since the engagement portions which engage with each other are provided at the storage-container member and the vehicle body, it can be properly prevented that the storage-container member is removed out of the vehicle when the impact load is applied to the vehicle body. Further, since the engagement releasing means operative to release the engagement of the engagement portions with the manual operation is provided at the storage-container member, the storage-container can be easily removed out of the vehicle body.

According to another embodiment of the present invention, there is provided a vehicle comprising a baggage compartment structure, as described above, wherein the vehicle is an open-top type of vehicle, in which an upper portion above a vehicle compartment which is formed in front of the trunk room is configured to be opened, and the support means is preferably configured to support the trunk lid in such a manner that an upper end of the trunk lid in the open state is positioned at a level which is higher than an upper end or head of a passenger who is seated in the vehicle compartment. Thereby, even if any loaded article jumps out of the trunk room when the vehicle has a rear collision in a state in which the trunk lid is open, the trunk lid may protect the passenger of the vehicle from the article jumping out.

According to a preferred embodiment of the present invention, in the open-top type vehicle, the trunk lid in the open state is configured to constitute an aero-board operative to restrain a traveling wind (air) from flowing into the vehicle compartment. Thereby, the traveling wind (air) can be properly prevented from flowing into the vehicle compartment.

According to another preferred embodiment of the present invention, in the open-top type vehicle, a roll bar is provided between the vehicle compartment and the trunk lid, and an interference-preventing portion operative to prevent interference of the trunk lid in the open state with the roll bar is provided at the trunk lid. Thereby, the trunk lid can be properly opened to its open state without any interference with the roll bar.

According to the present invention, there is further provided a method of forming a baggage compartment structure of a vehicle comprising the steps of:
providing a trunk room having an opening formed at an upper face thereof and configured to be closed with a trunk lid , and
forming said trunk lid such that it can rotate around an end portion thereof in such a manner that a back face thereof in an open state faces substantially upward
providing a baggage fixing means operative to fix a baggage in such a manner that a space above said trunk lid which is positioned in a specified open state and by means of a support means operative to support the trunk lid in the open state and said opening of the trunk room is used as a loading space of the baggage.

Preferably, the method further comprises the step of:
fixedly or detachably providing said baggage fixing means at a specified position which enables the baggage fixing means to be located inside the trunk room when the opening of the trunk room is closed with the trunk lid.

Preferably, the method further comprises the step of:
providing, in a storage portion of the trunk room, a watertight storage-container member with water-resisting qualities, wherein preferably a drain member to drain a liquid staying in the storage-container member is provided at the storage-container member.

Other features, aspects, and advantages of the present invention will become apparent from the following description which refers to the accompanying drawings.
FIG. **1A** is a plan view and FIG. **1B** is a side view of a vehicle with a baggage compartment structure according to a first embodiment of the present invention.
FIG. **2** is a view (an enlarged view of a roll bar portion), when viewed in a direction of an arrow A of FIG. **1** **A.**
FIGS. **3A** and **3B** are views of the vehicle with a trunk lid open, which correspond to FIGS. **1A** and **1B** respectively.
FIG. **4** is an enlarged sectional view (enlarged view of a hinge portion) taken along line B-B of FIG. **1A****.**
FIG. **5A** is an enlarged sectional view (enlarged view of a trunk-lid-side member portion of a lock mechanism) taken along line C-C of FIG. **1A****,** FIG. **5B** is a sectional view taken along line D-D of FIG. **5A****.**
   FIG. **6A** is an enlarged view of a portion indicated by an arrow E of FIG. **2** (enlarged view of a vehicle-body-side member portion of the lock mechanism), when viewed from the vehicle, FIG. **6B** is a sectional view taken along line F-F of FIG. **6A****.**
   FIG. **7** is an enlarged sectional view (enlarged view of a lock-mechanism portion) taken along line G-G of FIG. **3A****.**
   FIG. **8** is an enlarged sectional view (enlarged view of a trunk-room portion) taken along line H-H of FIG. **3A****.**
   FIG. **9** is a perspective view of a storage-container member.
   FIG. **10** is an example of baggage loading (case of a box).
   FIG. **11** is another example of baggage loading (case of a plant).
   FIG. **12** is another example of baggage loading (case of a bicycle).
   FIGS. **13A** and **13B** are perspective views of an attachment for fixing the bicycle.
   FIG. **14A** is an enlarged sectional view (enlarged view of an attachment portion of an attachment to the trunk lid and an attachment portion of an automotive vehicle to the attachment) taken along line J-J of FIG. **12**, and FIG. **14B** is an enlarged sectional view (enlarged view of an attachment portion of the attachment to a rear wall of the trunk room and the attachment portion of the automotive vehicle to the attachment) taken along line K-K of FIG. **12****.**
   FIG. **15** is another example of baggage loading (case of a surfboard).
   FIG. **16** is a perspective view of an attachment for fixing the surfboard.
   FIG. **17A** is a plan view and FIG. **17B** is a side view of the vehicle with a baggage compartment structure according to a second embodiment of the present invention.
   FIGS. **18A** and **18B** are views of the vehicle with the trunk lid open, which correspond to FIGS. **17A** and **17B** respectively.
   FIG. **19** is an enlarged sectional view (enlarged view of a hinge portion) taken along line L-L of FIG. **17A****.**
   FIG. **20A** is an enlarged sectional view (enlarged view of a trunk-lid-side member portion of the lock mechanism) taken along line M-M of FIG. **17A****,** and FIG. **20B** is an enlarged sectional view (enlarged view of a vehicle-body-side member portion of the lock mechanism) taken along line N-N of FIG. **17A****.**
   FIG. **21** is an enlarged sectional view (enlarged view of a lock-mechanism portion) taken along line P-P of FIG. **18A****.**
   FIG. **22** is a side view of the vehicle with a baggage compartment structure according to a third embodiment of the present invention.
   FIG. **23A** is a plan view and FIG. **23B** is a side view of the vehicle with a baggage compartment structure according to a fourth embodiment of the present invention.
   FIG. **24** is an enlarged sectional view (enlarged view of an aero-board portion) taken along line Q-Q of FIG. **23A****.**
   FIG. **25** is an enlarged sectional view (enlarged view of the aero-board portion) taken along line R-R of FIG. **23A****.**
   FIG. **26A** is a plan view and FIG. **26B** is a side view of the vehicle with a baggage compartment structure according to a fifth embodiment of the present invention.
   FIG. **27** is an enlarged sectional view of a trunk-room portion of a baggage compartment structure according to a sixth embodiment of the present invention.
   FIG. **28** is a perspective view of a storage-container member of the present embodiment.
   FIG. **29** is an enlarged sectional view taken along line L-L of FIG. **27****.**
   FIG. **30** is an operation diagram when an impact load is applied from the vehicle rear.
   FIG. **31** is an enlarged view of a portion indicated by an arrow M of FIG. **27****.** FIG. **32** is a view of a baggage compartment structure according to a seventh embodiment of the present invention, which corresponds to FIG. **8****.**
   FIG. **33** is a perspective view of a storage-container member of the seventh embodiment.
   FIG. **34** is a view of a baggage compartment structure according to an eighth embodiment of the present invention, which corresponds to FIG. **8****.**
   FIG. **35** is a perspective view of a storage-container member of the eighth embodiment.
FIG. **36** is a perspective view of a storage-container member of a ninth embodiment.
FIG. **37** is another example of baggage loading of the ninth embodiment (case of a bicycle).
FIG. **38** is an enlarged sectional view taken along line M-M of FIG. **37****.**

Hereinafter, the baggage compartment structure of a vehicle according to preferred embodiments of the present invention will be described. Although the embodiments are described separately, the skilled person easily recognizes that single features of one or more embodiments can be combined with another embodiment.

### EMBODIMENT 1

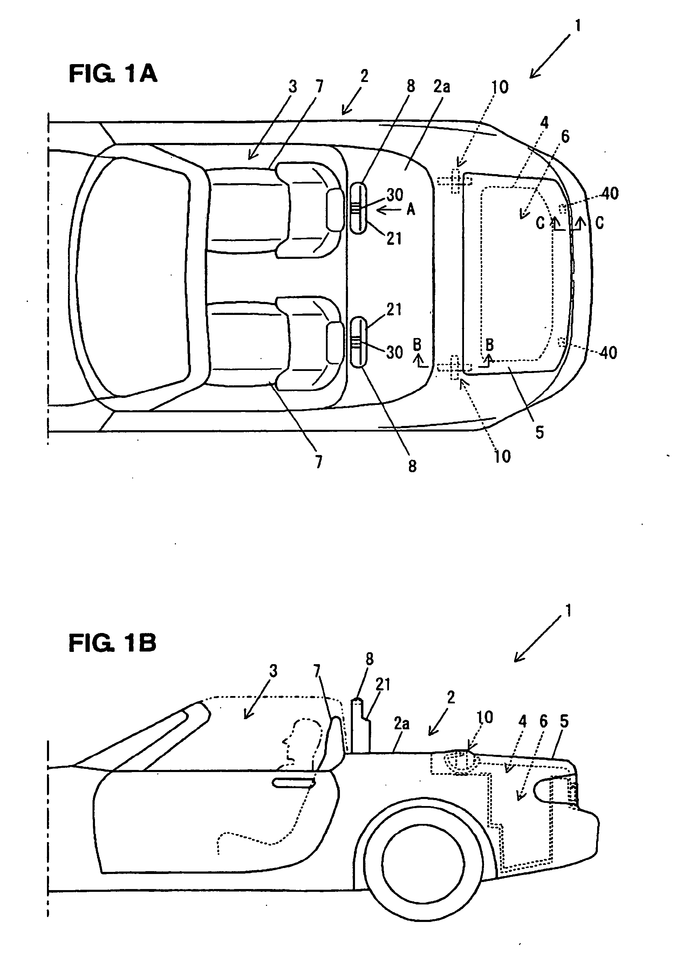

The baggage compartment structure according to the present embodiment is preferably applied to a vehicle **1** shown in FIGS. **1A, 1B****.** This vehicle **1** is an open-top type of vehicle in which a vehicle compartment 3 is provided at the central portion in the longitudinal direction of a vehicle body 2 and an upper portion above the vehicle compartment **3** can be opened.

A trunk room **6** is preferably provided at the rear side of the vehicle body **2** of the vehicle **1**, specifically at a rear side of a portion between a rear end of the vehicle compartment **2** and a rear end of the vehicle body **2.** An opening **4** formed at an upper face of the trunk room **6** can be closed with a trunk lid **5.**

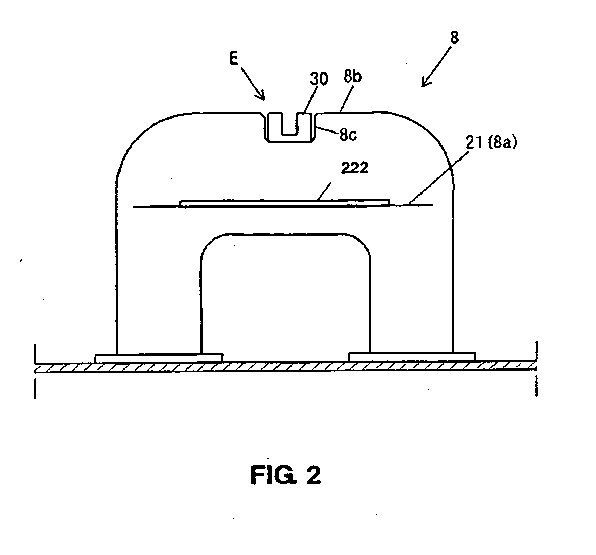

Further, the vehicle **1,** which is the open-top type of vehicle as described above, is preferably equipped with roll bars **8, 8** which are respectively provided, behind right and left seats **7, 7,** on an upper face **2a** of the vehicle body **2** between the vehicle compartment **3** and the trunk lid **5.** The roll bar 8 is to protect a passenger in case of the vehicle rolling over, which has a gate shape as shown in FIG. **2** (a view, when viewed in a direction of an arrow A of FIG. **1A**).

The trunk lid **5** is preferably supported at the vehicle body **2** via a pair of hinges **10, 10** which is preferably provided at both ends of a front end portion of the lid **5** as shown in FIGS. **1A** and **1B****.** According to the present embodiment, the trunk lid **5** is configured to rotate around its front end by the hinges **10, 10** in such a manner that its back face or lower side or inner face in its open state faces substantially upward such that the upper side or outer face faces substantially downward.

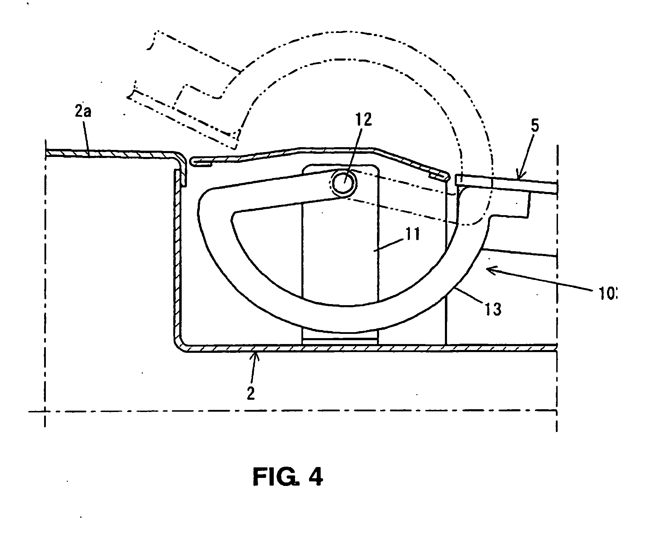

The hinge **10** preferably comprises, as shown in FIG. **4****,** a support bracket **11** which is fixed to the vehicle body **2** and a swan-neck type of rotational arm **13** which is rotatably supported via a support axis **12** which is provided at an upper end portion of the support bracket **11.** The support axis **12** is preferably positioned substantially at the same level as the upper face of the trunk lid **5,** so that the lid **5** can rotate in such a manner that the back face of the lid **5** faces substantially upward without interfering the vehicle-body upper face **2a** behind the vehicle compartment **3** as shown by broken lines.

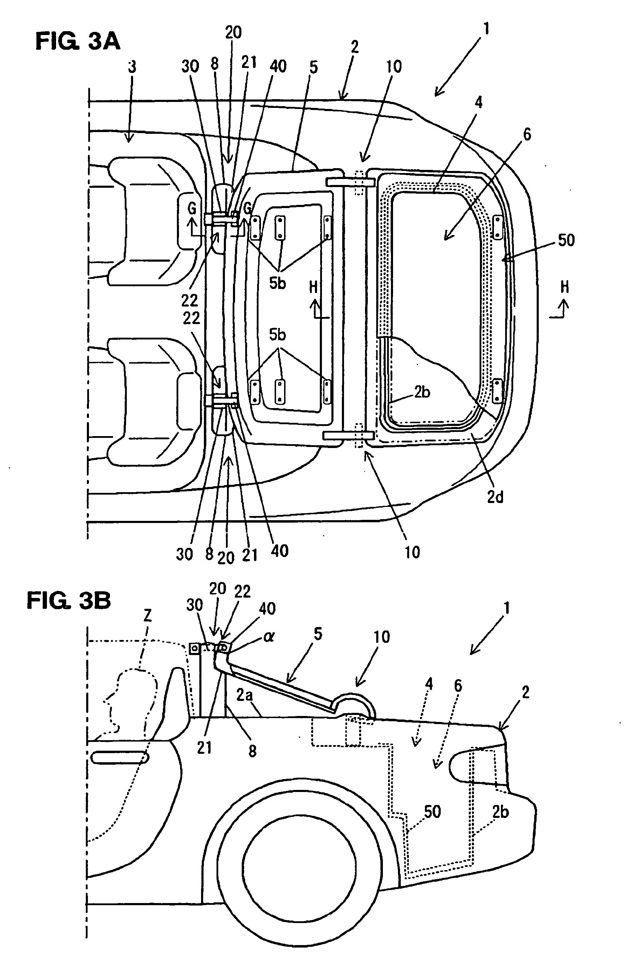

Further, a support mechanism **20** to support the trunk lid **5** in the open state (FIGS. **3A, 3B**) is provided in the present embodiment.

The support mechanism **20** preferably comprises, as shown in FIGS. **3A** and **3B****,** a support portion **21** which is preferably provided at the roll bar **8** so as to support the rear end portion of the trunk lid **5** and preferably a lock mechanism **22** which locks the trunk lid **5** in its open state.

Herein, the support portion **21** is, as shown in FIG. **2****,** comprised of a difference-in-level portion **8a** which is provided at the back face of an upper portion of an upper side portion **8b** of the roll bar **8,** and a resilient member **222** to protect a design face of the rear end portion of the trunk lid **5** is preferably attached to the upper face of the difference-in-level **8a.**

Herein, as apparent from FIG. **3B****,** the height of the support portion **21** is set such that an upper end α of the trunk lid **5** is higher than an upper end (head) of a passenger **Z** with a specified size who is seated in a seat **7** (at a specified location) in the vehicle compartment **3.**

The lock mechanism **22** comprises, as shown in FIGS. **1A, 1** **B, 3A, 3B,** a roll-bar-side member **30** which is provided at the roll bar **8** and a lid-side member **40** which is provided at the rear portion of the trunk lid **5.**

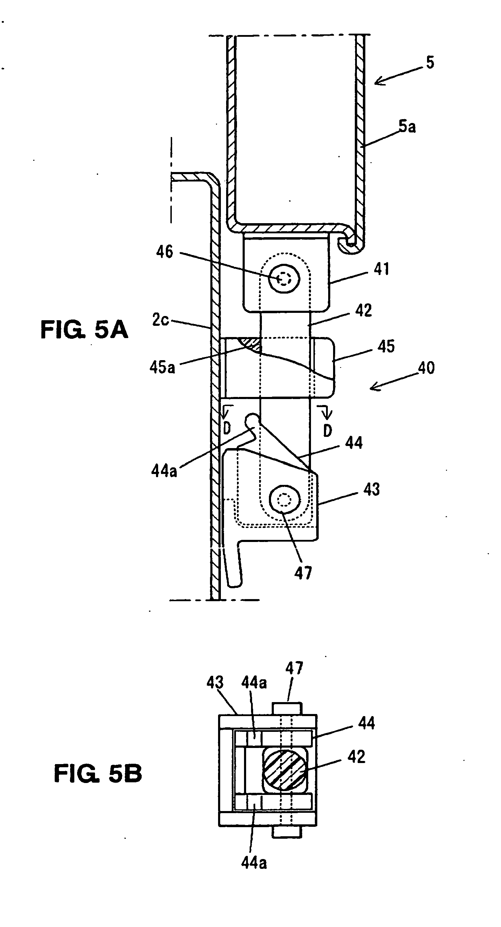

The lid-side member **40** comprises, as shown in FIGS. **5A** and **5B****,** a support bracket **41** which is fixed to a lower face portion of the rear wall **5a** of the trunk lid **5**, a bar member **42** which is rotatably supported at one end thereof so as to rotate around an axis **46** which is supported at the support bracket **41** so as to extend in the vehicle width direction, and an operational member **43** and an engagement member **44** which are supported so as to rotate around an axis **47** provided at the other end portion of the bar member **42.** The bar member **42** is preferably configured to engage with a groove **45a** of an engaging member **45** which is attached to the outer face of a trunk-room rear wall **2c** of the vehicle body **2** when the lock mechanism **22** is not used.

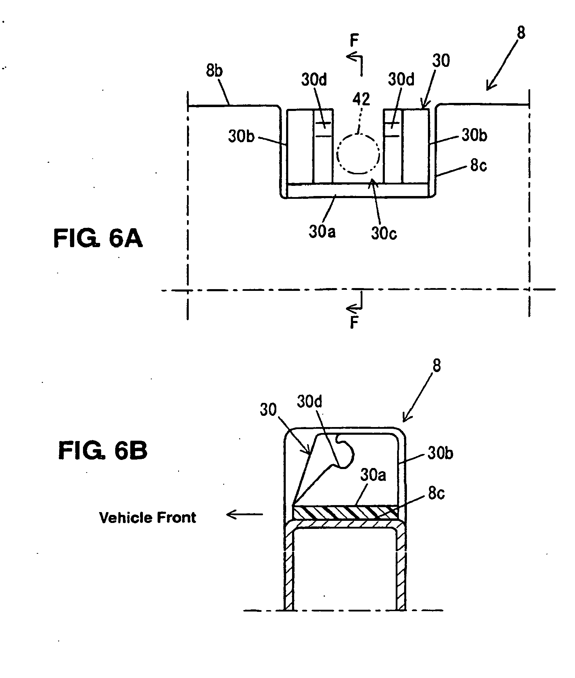

Meanwhile, the roll-bar-side member **30** is, as shown in FIG. **2****,** attached in a recess portion **8c** which is formed at the center of the upper portion of the upper side portion **8b** of the roll bar **8.** The roll-bar-side member **30** comprises, as shown in FIG. **6****,** a base portion **30a** and a pair of vertical wall portions **30b, 30b** which extend upward from right and left end portions of the base portion **30a.** These portions **30a, 30b, 30b** form a groove portion **30c** which the bar member **42** of the lid-side member **40** can engage with.

As shown in FIGS. **5A, 5B****,** **6A, 6B****,** engagement recess portions **30d, 30d** and engagement projection portions **44a, 44a,** which are configured to engage with each other, are preferably provided at the front portion side of the inner face of the vertical wall portions **30b, 30b** of the roll-bar-side member **30** and the upper portion side (in the vertical direction in FIGS. **5A, 5B**) of the engagement member **44** of the lid-side member **40.**

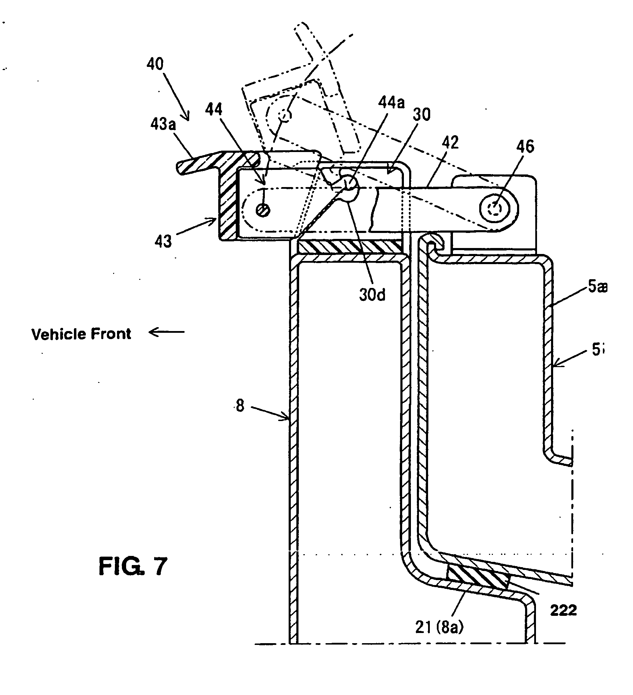

As shown in FIG. **7****,** in a state in which the rear end portion of the trunk lid **5** in the open state is placed on the support portion **21** of the roll bar **8** via the resilient member **222,** the bar member **42** is rotated around the axis **46** by holding an operational portion **43a** of the operational member **43,** so that the engagement between the recess portion **30d** and the projection portion **44a** is achieved as shown by broken lines. Then, the bar member **42** is further rotated around the axis **46** with the rotation of the operational member **43** and the engagement member **44** around this engagement portion, so that the engagement recess portion **30d** of the engagement member **30** and the engagement projection portion **44a** of the engagement member **44** are made in the engagement state shown by solid lines. In this engagement state, the locked state is maintained until the operation of the operational member **43** by the toggle mechanism. That is, even if the vehicle **1** travels with the trunk lid **5** open as shown in FIGS. **3A, 3B****,** the trunk lid **5** can be properly prevented from fluttering due to the vehicle vibration or the like, and thereby any improper influence to the vehicle body can be prevented.

Thus, according to the present embodiment, even the large baggage, which may not be loaded with the trunk lid **5** in the closed state, can be loaded with the trunk lid **5** which is open by using the space above the opening **4** of the trunk room **6.** And, the vehicle **1** can travel in this state. Further, this advantage can be achieved without the large and complex structure and damaging the vehicle design.

Herein, since the rainwater comes into the trunk room **6** if the vehicle 1 travels with the trunk lid **5** open when it rains, it may be preferable that some proper measures to this be taken.

According to the present embodiment, as shown in FIGS. **3A, 3B****,** the trunk room is comprised of a recess portion **2b** which is formed by panels of the vehicle body **2** and a watertight storage-container member **50** (storage portion) which is made from resin, which is inserted into the recess portion **2b** from above.

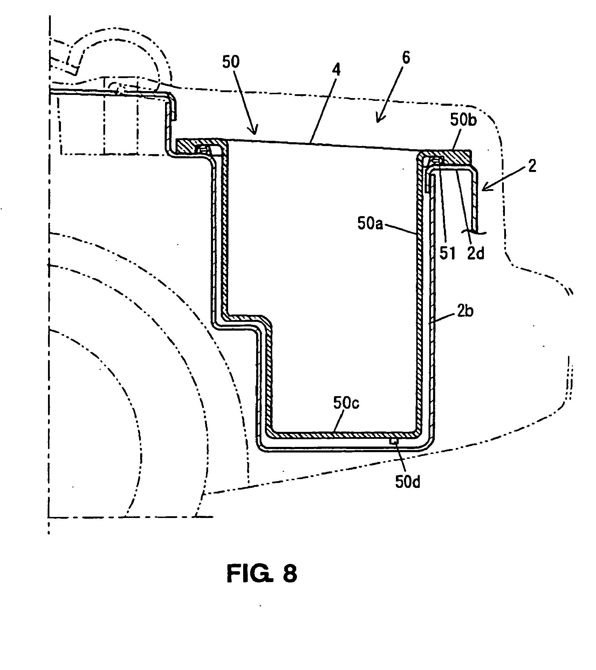

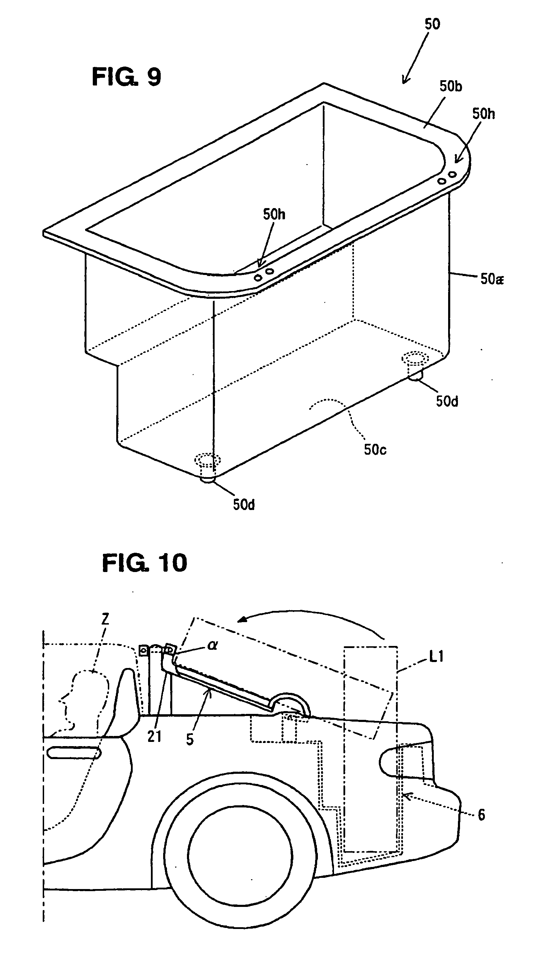

The storage-container member **50** comprises, as shown in FIGS. **8** and **9****,** a box portion **50a** which is of a box shape and has an open upper face (forming the opening **4**) and a flange portion **50b** which is provided at an upper edge of the body portion **50a.** The storage-container member **50** is supported at the vehicle body **2** with the flange portion **50b** being placed on a flat-face portion **2d** which is provided along the upper end portion of the recess portion **2b** of the vehicle body. Accordingly, the storage-container member **50** can be removed of the recess portion **2b** by being pulled up.

A seal member **51** is attached to the lower face of the flange portion **50b** so as to prevent the rainwater or the like from coming into the recess portion **2b** and some portion of the vehicle body **2** which is continuous to the recess portion **2b.** Thus, according to the present embodiment, since the storage-container member **50** is provided, the inside of the recess portion **2b** of the trunk room **6** or panels which form the vehicle body can be properly protected from the rainwater.

Further, at a bottom-face portion **50c** of the storage-container member **50** are provided drains **50d, 50d** with caps, not illustrated. In a case in which the vehicle travels with the trunk lid **5** in the open state in the rain and the rainwater stays in the storage-container member **50,** the rainwater can be drained by removing the caps after taking out the storage-container member **50.** Also, when the storage-container member **50** becomes dirty, it can be easily cleaned with the water or the like after being removed from the vehicle body **2.** Further, the storage-container member **50** is so deep that its bottom is located close to the lower face portion of the vehicle body. Accordingly, even a tall baggage can be stored in it properly and stably.

Hereinafter, some examples of the baggage loading will be described.

FIG. **10** shows an example in which a tall baggage **L1** which is greater than the depth of the trunk room **6.** Thus, according to the baggage compartment structure of the present embodiment, even the tall baggage which is greater than the depth of the trunk room **6** can be properly loaded.

In this case, since the upper end α of the trunk lid **5** in the open state is positioned at the specified level which is higher than the upper end (head) of the passenger **Z** with the specified size who is seated at the specified location in the vehicle compartment **3,** even if the baggage **L1** jumps out of the trunk room **6** when the vehicle has a rear collision, the trunk lid can protect the passenger of the vehicle from the baggage L1 jumping out.

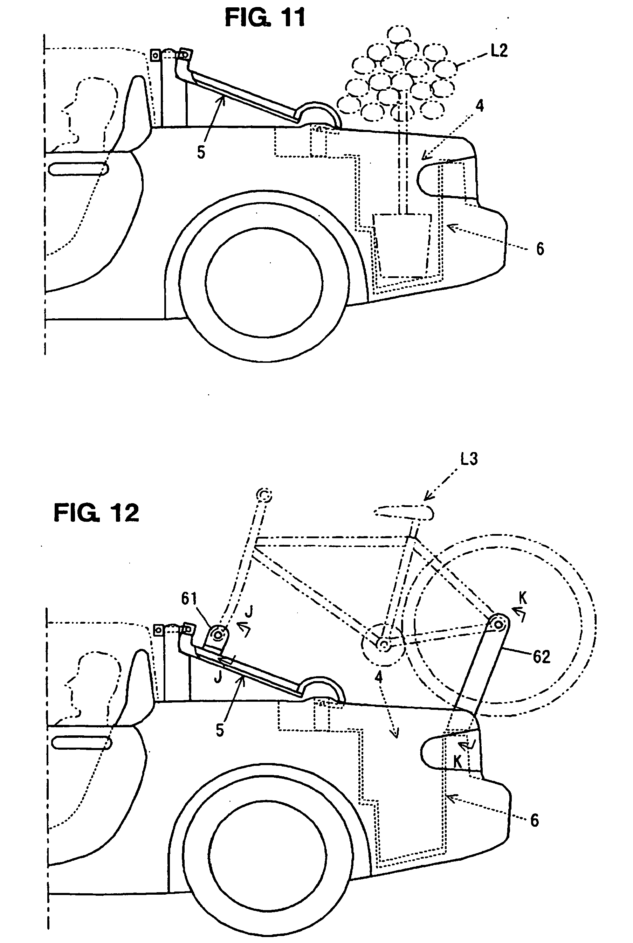

**FIG. 11** is another example in which a baggage **L2,** such as a plant, having an upper portion with the longitudinal width which is greater than the opening **4** of the trunk room **6.** Thus, according to the baggage compartment structure of the present embodiment, even the baggage with the longitudinal width which is greater than the opening **4** can be properly loaded.

In the present embodiment, as shown in FIGS. **3A** and **3B****,** there are provided plural attachment portions **5b...5b** operative to attach an attachment, which will be described later, at the back face (an inner panel, for example) of the trunk lid **5.** Herein, by fixing this attachment to the attachment portions **5b...5b** when the trunk lid **5** is in the open state, the space above the trunk lid **5** and the opening **4** of the trunk room **6** can be used as the baggage-loading space.

For example, FIG. **12** is another example in which a bicycle **L3** is loaded at the space above the trunk lid 5 and the opening **4** of the trunk room **6** by using support brackets **61, 62** as an attachment **60.**

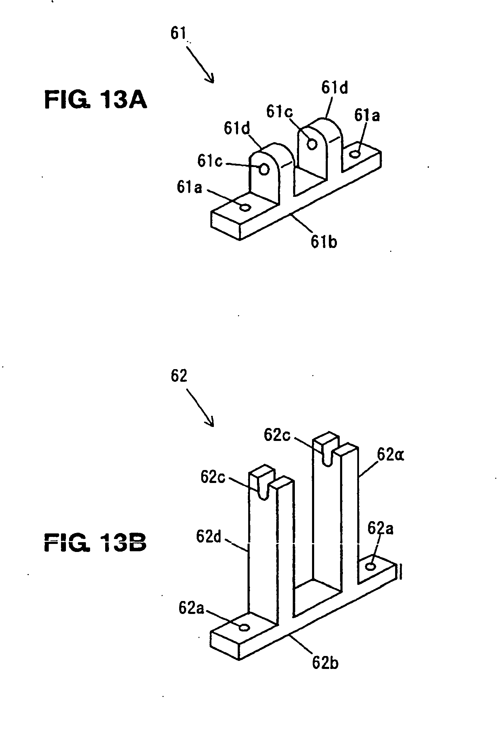

The front support bracket **61** preferably comprises a base portion **61b** which has a pair of bolt holes **61a, 61a,** and a pair of standing portions **61d, 61d** which is provided so as to stand from the base portion **61b** and has bolt holes **61c, 61c** at the upper end portion thereof, as shown in FIG. **13A****.**

Meanwhile, the rear support bracket **62** preferably comprises a base portion **62b** which has a pair of bolt holes **62a, 62a,** and a pair of standing portions **62d, 62d** which is provided so as to stand from the base portion **62b** and has bolt holes **62c, 62c** at the upper end portion thereof, as shown in FIG. **13B****.**

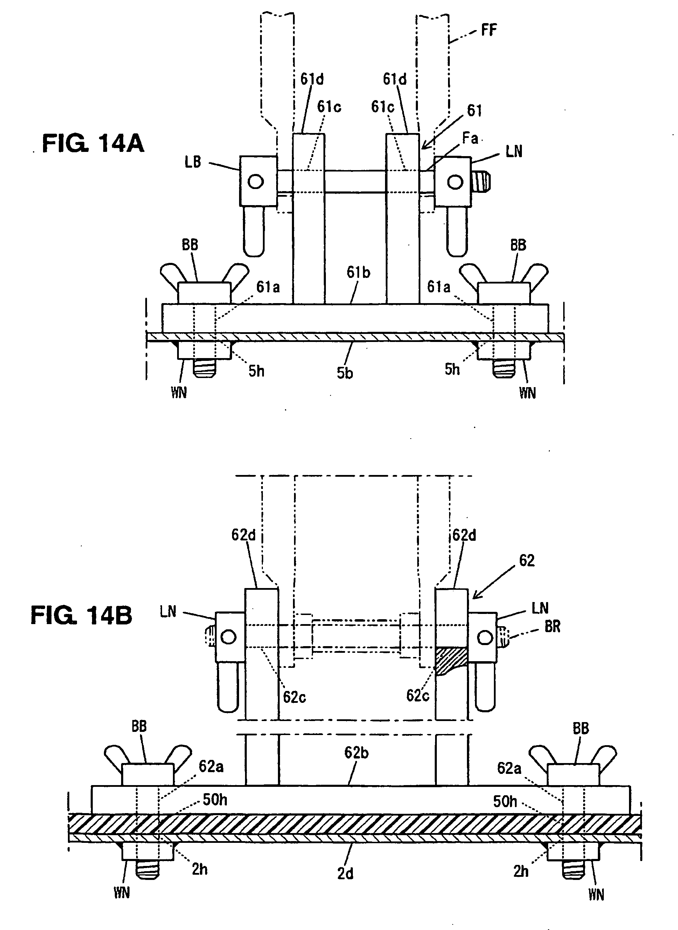

Herein, the front support bracket **61** is preferably fixed, as shown in FIG. **14A****,** by applying bolts **BB** into nuts **WN** provided at the inner face of the attachment portion **5b** at the back face of the trunk lid **5** through the bolt holes **61 a, 61 a** of the base portion **61 b** and bolt holes **5h, 5h** which are formed at the attachment portion **5b** at the back face of the trunk lid **5.** Further, a bolt with an handle **LB** is inserted into front-wheel journal portions **Fa** (a groove portion and a hole portion) of a lower end portion of a front fork **FF** of a bicycle and the bolt holes **61c** of the standing portion **61d** of the front support bracket **61.** Then, by applying a pair of nuts with handles **LN** to the tips of the bolt **LB,** the front-wheel journal portions **Fa** are fixed to the front support bracket **61.**

Meanwhile, the rear support bracket **62** is preferably fixed, as shown in FIG. **14B****,** by applying bolts **BB** into nuts **WN** provided at the lower face of the flat-face portion **2d** of the upper edge of the recess portion **2b** of the vehicle body **2** through the bolt holes **62a, 62a** of the base portion **62b** and bolt holes **50h, 50h** of the flange portion **50b** of the storage-container member **50** and bolt holes **2h, 2h** formed at the flat-face portion **2d.** Further, by placing the both ends of a rear-wheel axle bolt **BR** of the bicycle **L3** into the grooves **62c** of the standing portions **62d, 62d** from above and by applying the nuts with handles **LN** to the both ends of the bolt **BR,** the rear side portion of the bicycle is fixed to the rear support bracket **62.**

Thus, by fixing the front portion and the rear portion of the bicycle **L3** to the trunk lid **5** and the vehicle body **2** via the attachments **61, 62,** the space above the trunk lid **5** and the opening **4** of the trunk room **6** can be used as the loading space of the bicycle **L3.**

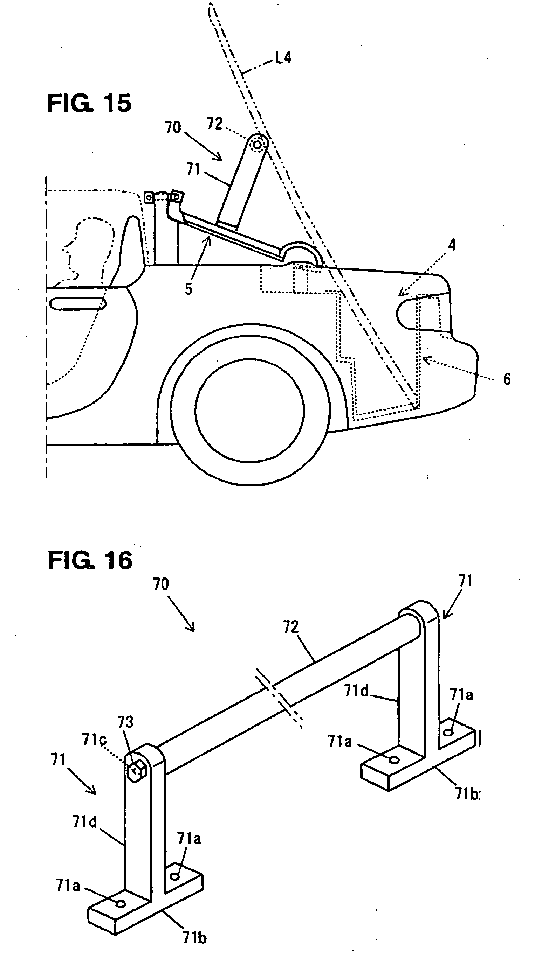

FIG. **15** shows another example in which a surfboard **L4** is loaded in the space above the trunk lid **5** and the opening **4** of the trunk room **6.**

An attachment **70** for this is preferably comprised of a pair of brackets **71, 71** and a pole member **72** as shown in FIG. **16****.** The support brackets **71, 71** comprise base portions **71b, 71b** which have a pair of bolt holes **71a, 71a** respectively and a pair of standing portions **71d, 71d** which is provided so as to stand from the base portions **71b, 71b** and has bolt holes **71c, 71c** at the upper end portions thereof respectively.

The pole member **72** is preferably screwed to the upper ends of the support brackets **71, 71** with bolts **73, 73** through screw holes **71c, 71c.** That is, the pole member **72** can be disassembled. The base portions **71b, 71b** of the both support brackets **71, 71** are preferably fixed to the attachment portions **5b, 5b** of the back face of the trunk lid **5** with screws like the support bracket **61.**

Then, as shown in FIG. **15****,** the lower portion of the surfboard **L4** is stored in the trunk room **6,** and its upper portion is fixed to the pole member **72** of the attachment **70** with a string or the like. Thus, the space above the trunk lid **5** and the opening **4** of the trunk room **6** is used as the loading space for the surfboard **L4.**

Herein, other long baggage than the surfboard **L4,** such as a wash-line pole, bow, plate, can be properly loaded by the attachment **70.**

Thus, according to the present embodiment, since the attachments **60, 70** are detachable to the trunk lid **5** or the vehicle body **2,** the space inside the trunk room **6** can be effectively used by removing the attachments **60, 70** when the trunk lid **5** is closed. Further, various kinds of attachment may be used, so various kinds of baggage can be loaded accordingly.

Since the attachments **60, 70** are fixedly or detachably provided at the specified position (attachment portion or the like) which enables the attachments **60, 70** to be located inside the trunk room **6** when the trunk lid **5** is closed, they are not viewed from the outside of the vehicle **1** when the trunk lid **5** is closed. Accordingly, the fine view of the vehicle **1** may not deteriorate.

Herein, if the baggage fixing means is relatively small, it may be provided at the specified position which enables it to be located inside the trunk room **6** so as to be integral with the back face of the trunk lid **5,** the storage-container member **50,** or the like. In this case, the operation of attaching or removing the attachment can be properly omitted.

While the attachment **60** for loading bicycle and the attachment **70** for loading surfboard or the like are described in the above-described embodiment, other various kinds of baggage may be loaded by applying attachments for other kinds of baggage. Further, while the application to the open-top type of vehicle is described in the present embodiment, the present invention is applicable to another type, such as a sedan type, of vehicle.

### EMBODIMENT 2

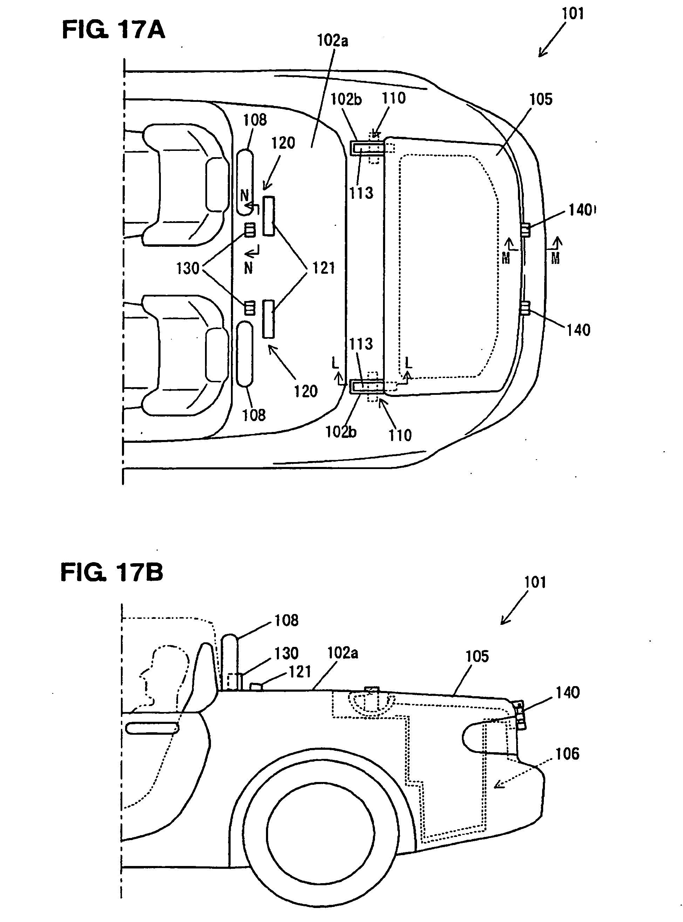

A second embodiment of the present invention will be described referring to FIGS. **17A****,** **17B-21****.**

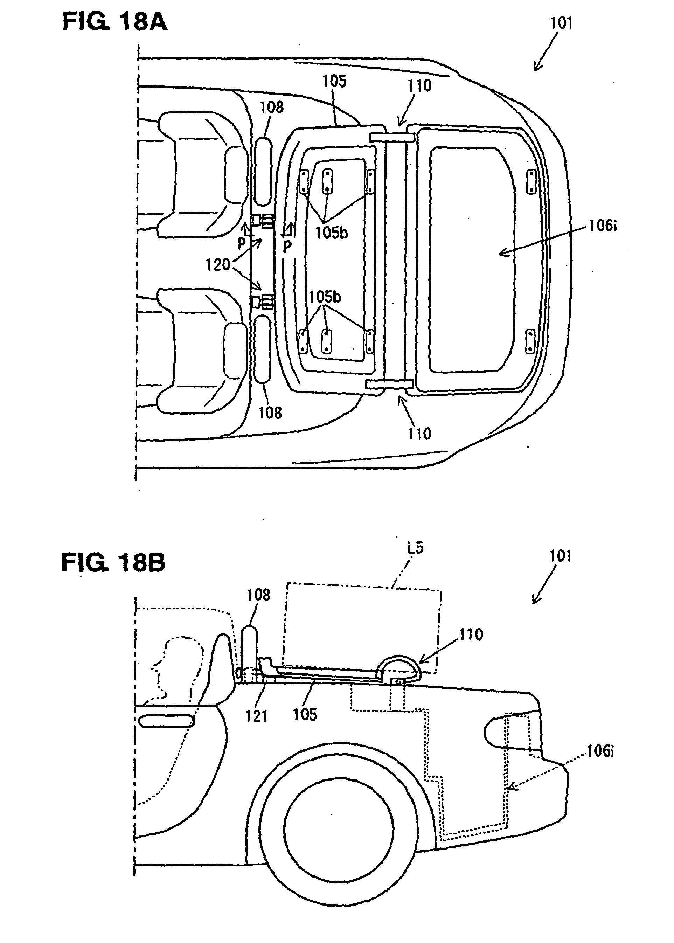

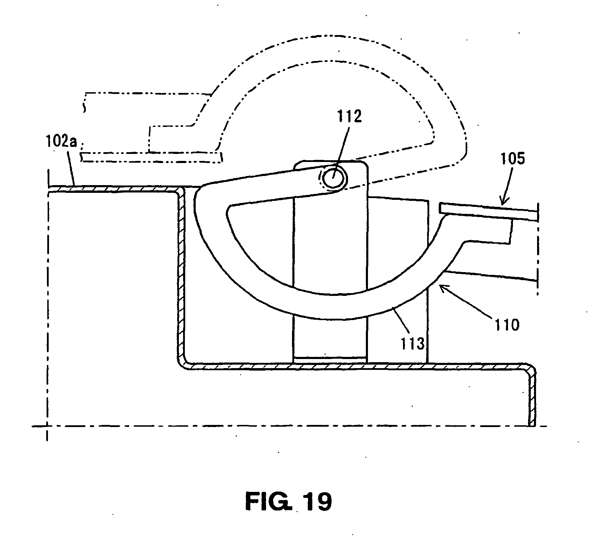

A vehicle **101** of the second embodiment is configured such that a trunk lid **105** is opened to a substantially horizontal state as shown in FIG. **18A, 18B****.** That is, as shown in FIG. **19****,** a hinge **110,** which is preferably the swan-neck type like the first embodiment, is configured such that a support axis **112** is positioned at a higher level than the upper face of the trunk lid **105** and an upper face **102a** of a vehicle body **102,** thereby enabling the trunk lid **105** to open substantially horizontally, without any interference with the upper face **102a** of the vehicle body **102,** as shown by broken lines.

Returning to FIGS. **17A, 17B****,** the longitudinal position of the hinge **110** and the longitudinal length of the trunk lid **105** are sel so as not to interfere with roll bars **108** even if the trunk lid **105** opens substantially horizontally. Further, at the upper face **102a** of the vehicle body **102** is formed a pair of notches **102b** which extends in the vehicle longitudinal direction to avoid interference with a pair of rotational arms **113.** Further, as shown in FIGS. **17A, 17B****,** a pair of support mechanisms **120** preferably comprises a pair of support members **121** which is provided at the vehicle-body upper face behind the roll bars **108** and made of a resilient member, and a pair of lock mechanisms **122.**

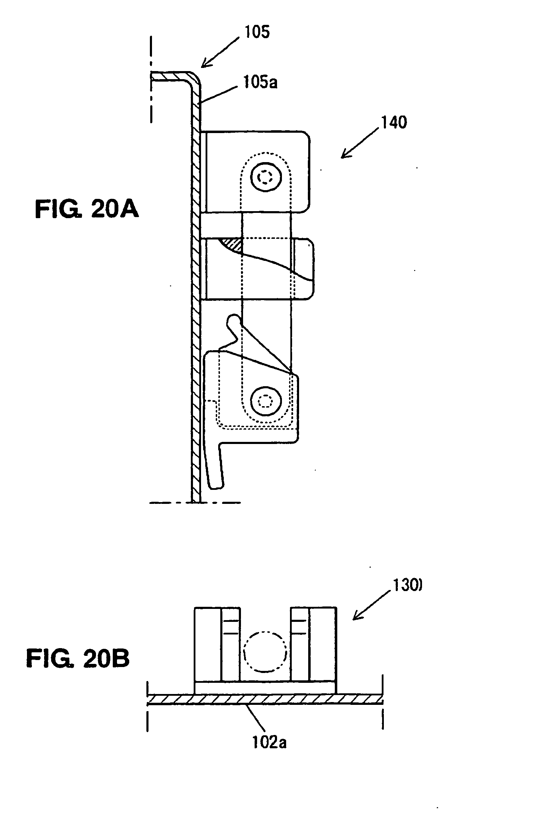

The lock mechanism **122** preferably has a similar structure to the first embodiment, but has a different disposition position. As shown in FIGS. **17A, 17B****,** **20A, 20B****,** lid-side members **140** are provided at the rear face of a rear wall **105** of the lid **105,** and vehicle-body-side members **130** are attached to the vehicle-body upper face **120a** beside the roll bars **108.** The basic structures of the members **130, 140** are substantially the same as those of the first embodiment, so their descriptions are omitted here.

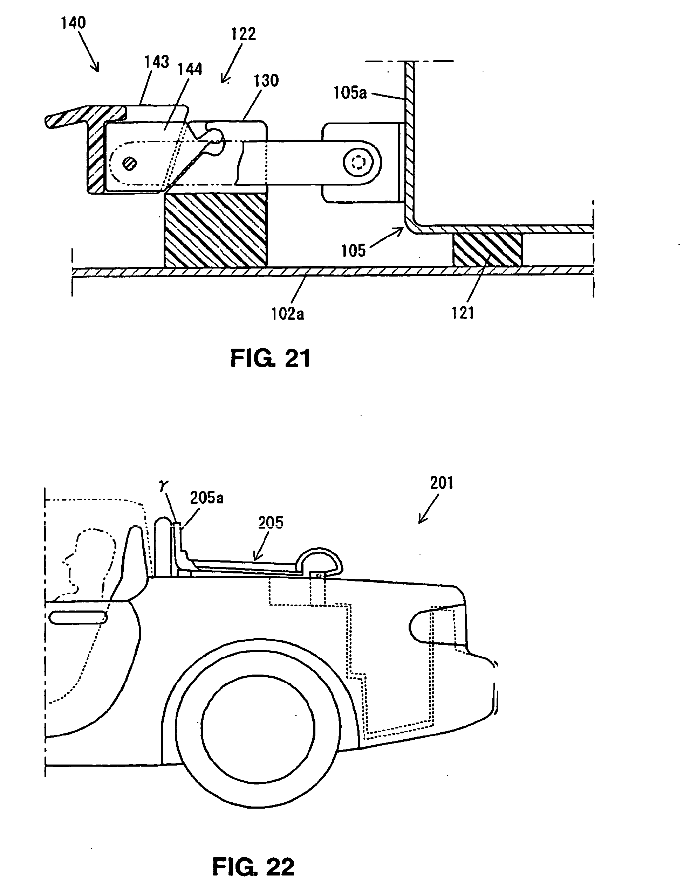

As shown in FIG. **21****,** the rear portion of the trunk lid **105** is supported by the support member **121** in the sate in which the trunk lid 105 is open. Then, by making engagement between an engagement member **144** and the vehicle-body-side member **130** with operation of an operational member **143** of the lock mechanism **122,** the trunk lid **105** is locked in its open state. Other structures are similar to the first embodiment, and their descriptions are omitted here.

According to the above-described structure, as shown in FIGS. **18A, 18B****,** any baggage **L5** which needs to be loaded substantially or any baggage which may not be stored inside the trunk room **106** can be properly loaded on the back face of the trunk lid **105.** In this case, the baggage **L5** may be fixed properly with a string whose hook is detachably provided at an attachment portion **105b** at the back face of the lid **105.** Herein, the string engaging portion may be formed integrally with the back face of the trunk lid **105.**

Herein, in a case in which the attachment is used, the one having the suitable length to the present embodiment may be prepared properly.

In general, the traveling wind (air) tends to flow into the vehicle compartment in case of the open-top type of vehicle. Hereafter, other embodiments (third and fourth embodiments) equipped with measures for preventing the traveling wind from flowing in will be described.

### EMBODIMENT 3

At first, a third embodiment will be described referring to FIG. **22****.** A vehicle **201** according to the third embodiment is configured such that the vertical length of a rear wall **205a** of the trunk lid **205** is longer than that of the second embodiment. This vertical length is set such that an upper end position γ (upper end in FIG. **22**) of a rear wall **205a** of a trunk lid **205** in the open state is positioned at a specified level which is equivalent to or higher than the upper end position of the passenger, for example.

According to the present embodiment, the rear wall **205a** of the trunk lid **205** can be made perform the aero-board function, merely by setting the vertical length of the rear wall **205a** as described above.

### EMBODIMENT 4

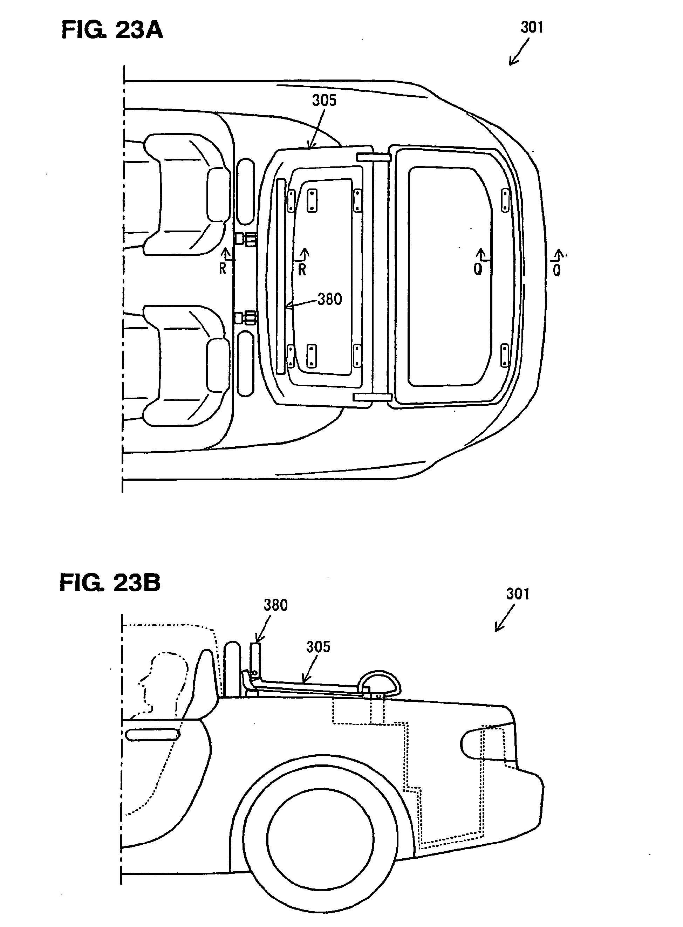

A fourth embodiment will be described referring to FIGS. **23A, 23B****.** A vehicle **301** of the fourth embodiment has an aero-board member **380** at a rear portion of the back face of a trunk lid **305.**

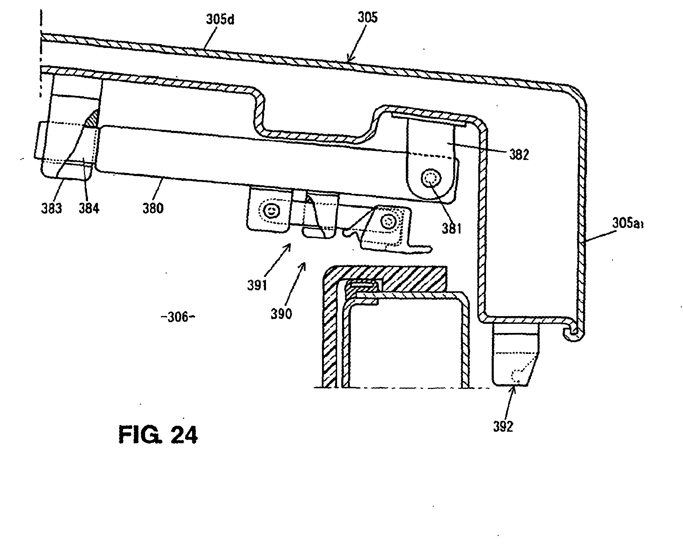

The aero-board member **380** is preferably stored in a trunk room **306** so as to be located along the back face of an upper face portion **305d** of the trunk lid **305** in the closed state of the trunk lid **305** as shown in FIG. **24****.** Its rear end portion (in FIG. **24**) is preferably supported at a support axis **381** and a support bracket **382,** which are provided at the back face of the upper face portion **305d** of the trunk lid **305,** so that the aero-board member **380** can rotate longitudinally. An engagement member **384** provided at its front end portion (in FIG. **24**) engages with an engagement member **383** provided at the back face of the upper face portion **305d** of the trunk lid **305.**

Further, as shown in FIG. **24****,** an aero-board lock mechanism **390** which has a boar-side member **391** and a lid-side member **392** like the above-described lock mechanism is provided at the lower face of the aero-board member **380** and the lower face of a rear wall **305a** of the trunk lid **305.**

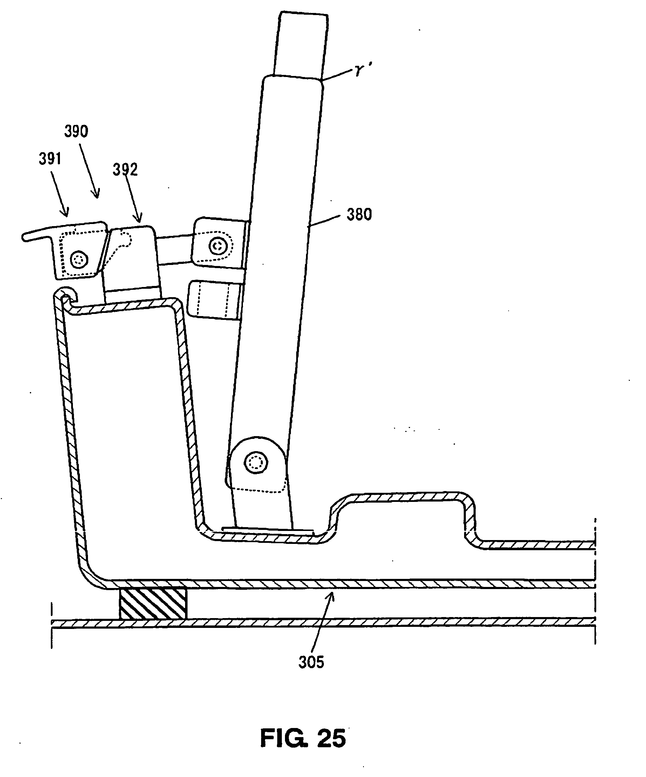

Then, in the open state of the trunk lid **305** shown in FIG. **25****,** the aero-board member **380** is made stand up and herein the board-side member **391** and the lid-side member **392** of the aero-board lock mechanism **390** are made engage wish each other. Thereby, the aero-board member **380** can be held in its standing state. The shape of the aero-board member **380** is preferably configured such that the level of its upper end γ' is equivalent to or higher than the upper end portion of the passenger in the standing state.

According to the present embodiment, the function of the aero-board can be achieved by the aero-board member **380** provided at the trunk lid **305** even in a case in which the shape of the rear wall **305a** of the trunk lid **305** may not be changed like the above-described third embodiment for the reason of design, for example. Further, since the aero-board member **380** can be properly located inside the vehicle body, the proper vehicle design can be maintained.

Herein, while the aero-board member **380** is supported at the back face of the trunk lid **305** so as to rotate according to the present embodiment, a bracket to fix the aero-board member to the attachment portion of the back face of the trunk lid may be provided at the aero-board member and the bracket may be fixed via bolts or the like. Thereby, the structure may be simple without lock mechanism.

### EMBODIMENT 5

While the roll bar is provided near the seat in the vehicle compartment in the above-described first - fourth embodiments, there may be a case in which it is disposed rearward for the design reason or the like. In this case, however, there is a concern that the front end portion of the trunk lid interferes with the roll bar when the trunk lid opens so that the back face of the trunk lid faces substantially upward. Therefore, a fifth embodiment which solves this concern will be described.

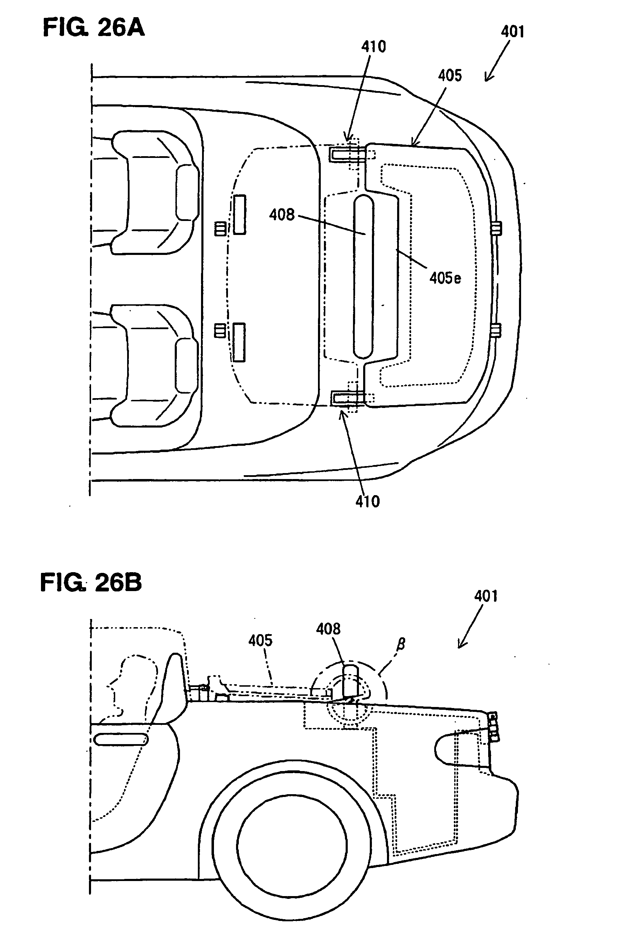

That is, a vehicle **401** according to the fifth embodiment is configured, as shown in FIGS. **26A, 26B****,** such that a roll bar **408** is disposed almost at the same longitudinal position as hinges **410** and a notch **405e** is formed at the front end portion of the trunk lid **405.**

The width of the notch **405e** is greater than that of the roll bar **408,** and its depth (longitudinal length) is set so that the move locus β of the front end of the notch **405e** can pass over the upper end of the roll bar **408.** Accordingly, when the trunk lid **405** is opened to the state in which its back face faces substantially upward, it can be prevented that the trunk lid **405** interferes with the roll bar **408.**

### EMBODIMENT 6

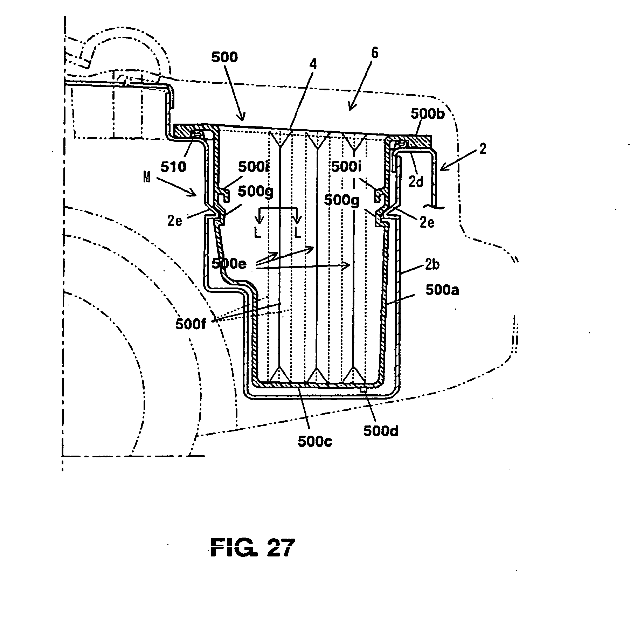

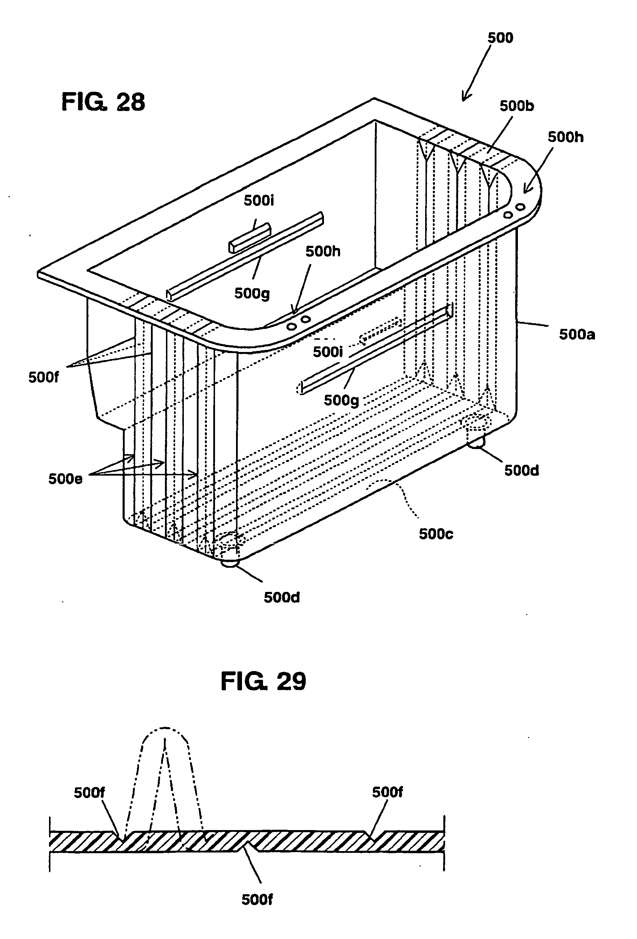

A storage-container member **500** of the present embodiment preferably comprises, as shown in FIGS. **27** and **28****,** a box portion **500a** which is of a box shape and has an open upper face (forming the opening **4**) and a flange portion **500b** which is provided at an upper edge of the body portion **500a.** The storage-container member **500** is preferably supported at the vehicle body **2** with the flange portion **500b** being placed on the flat-face portion **2d** which is provided along the upper end portion of the recess portion **2b** of the vehicle body. Accordingly, the storage-container member **500** can be removed of the recess portion **2b** by being pulled up.

A seal member **510** is preferably attached to the lower face of the flange portion **500b** so as to prevent the rainwater or the like from coming into the recess portion **2b** and some portion of the vehicle body **2** which is continuous to the recess portion **2b.** Thus, according to the present embodiment, since the storage-container member **500** is provided, the inside of the recess portion **2b** of the trunk room **6** or panels which form the vehicle body **2** can be properly protected from the rainwater.

Further preferably, at a bottom-face portion **500c** of the storage-container member **500** are provided drains **500d, 500d** with caps, not illustrated. In a case in which the vehicle travels with the trunk lid **5** in the open state in the rain and the rainwater stays in the storage-container member **500,** the rainwater can be drained by removing the caps after taking out the storage-container member **500.** Also, when the storage-container member **500** becomes dirty, it can be easily cleaned with the water or the like after being removed from the vehicle body **2.** Further, the storage-container member **500** is so deep that its bottom is located close to the lower face portion of the vehicle body. Accordingly, even the tall baggage can be stored in it properly and stably.

Herein, in the present embodiment, as shown in FIGS. **27** and **28****,** the storage-container member **500** preferably has a plurality of folding portions **500e...500e** (deformation promoting means) which are properly collapsible in the longitudinal direction when the impact load is applied to the vehicle body **2** from the vehicle rear.

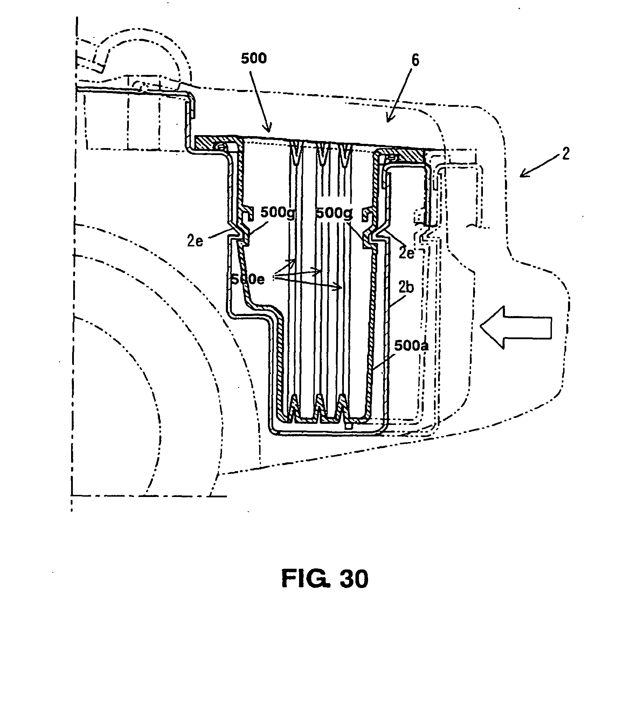

The folding portions **500e...500e** are preferably comprised of plural grove portions **500f...500f** which are formed at both-side face portions and the bottom-face portion of the body portion **500a,** and the flange portion **500b.** The groove portions **500e...500e** are preferably comprised of V-shaped grooves as shown in FIG. **29****.** When the impact load which is greater than a specified value is applied to the storage-container member **500** from the vehicle rear, the respective groove portions **500f...500f** bend, so that the storage-container member **500** is deformed so as to fold longitudinally in a bellows shape as shown in FIG. **30****.**

Accordingly, it can be properly restrained that the impact load is applied to the vehicle compartment **3** which is located in front of the trunk room **6** at the vehicle rear collision or the like. Thereby, the safety of the passenger in the vehicle compartment **3** can be improved. Further, since the storage-container member **500** is made of resin, the control of the above-described value of the impact load can be easily conducted by adjusting the thickness or the like of the resin member.

Further, since the folding portions **500e...500e** (deformation promoting means) are configured so as to fold in the longitudinal direction of the vehicle body in the bellows shape when the impact load which is greater than the specified value is applied to the storage-container member **500,** the impact load can be effectively absorbed. Accordingly, it can be properly prevented that the impact load is applied to the vehicle compartment **3.** Further, the control of the specified value of the impact load can be easily conducted by adjusting the number of bellows, the depth of bellows and the like.

Herein, the storage-container member **500** stores various things in it, so its inside may become dirty easily. Accordingly, it may be preferable that the member **500** be removed easily to be cleaned up. Therefore, the storage-container member **500** is preferably configured to be merely inserted into the recess portion of the vehicle body from above, without using bolts or the like. In this case, however, there is a concern that the storage-container member **500** would be removed out of the vehicle improperly when the impact load is applied to the vehicle body **2** at the state of the trunk lid **5** open.

According to the present embodiment, as shown in FIGS. **27** and **28****,** at the front face portion and the rear face portion of the body portion **500a** of the storage-container member **500** are preferably respectively formed recess portions **500g, 500g** (engagement portions) which extend in the vehicle width direction and project toward the container inside. Further, at the front face portion and the rear face portion of the recess portion **2b** of the vehicle body are respectively formed projection portions **2e, 2e** (engagement portions) which extend in the vehicle width direction and project toward the storage-container member **500.** The projection portions **2e, 2e** are formed at the position which corresponds to the recess portions **500g, 500g** of the storage-container member **500** stored in the recess portion **2b,** so that the recess portions **500g, 500g** of the storage-container member **500** and the projection portions **2e, 2e** of the vehicle body **2** engage with each other in the application state.

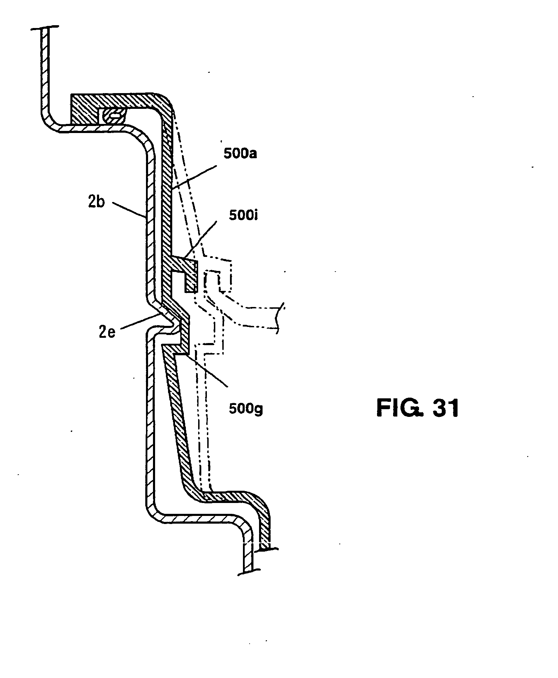

Further, handling portions **500i, 5001** which project toward the inside of the member **500** at the front face portion and the rear face portion of the base portion **500a** of the storage-container member **500** above the above-described recess portions **500g, 500g** may preferably be provided. Further, the storage-container member **500** is preferably configured as shown in FIG. **31** such that the front face portion and the rear face portion of the base portion **500a** deform toward the center of the member **500** as shown by the broken lines when the handling portions **500i, 500i** are pulled toward the center of the member **500** (for example, the thickness of these face portions are set to be deformable). Thereby, the engagement between the projection portion **2e** of the vehicle body **2** and the recess portion **500g** of the storage-container member **500** is releasable with a manual operation.

As described above, since the projection portions **2e, 2e** and the recess portions **500g, 500g** (engagement portions) which engage with each other are provided at the base portion **500a** of the storage-container member **500** and the recess portion **2b** of the vehicle body **2** according to the present embodiment, the storage-container member **500** can be prevented from being removed out of the vehicle improperly even when the impact load is applied to the vehicle body **2.** Also, since the handling portions **500i, 500i** (engagement releasing means) operative to release the above-described engagement with the manual operation are provided at the storage-container member **500,** the member **500** can be easily removed out of the vehicle body **2,** for example, when it is cleaned up.

Herein, in place of the folding portions **500e...500e,** another type of bellows-shape portion which does not contract perfectly at the initial stage but contracts further when receiving the impact load may be applied. Further, by weakening the strength of the side face portion, bottom face portion or flange portion of the body portion **500a** compared with the strength of its front face portion and rear face portion, the deformation promoting means may be provided.

### EMBODIMENT 7

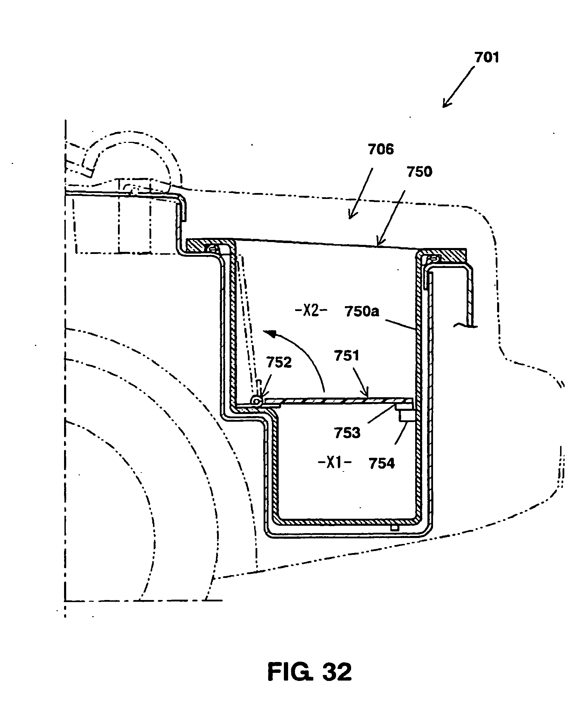

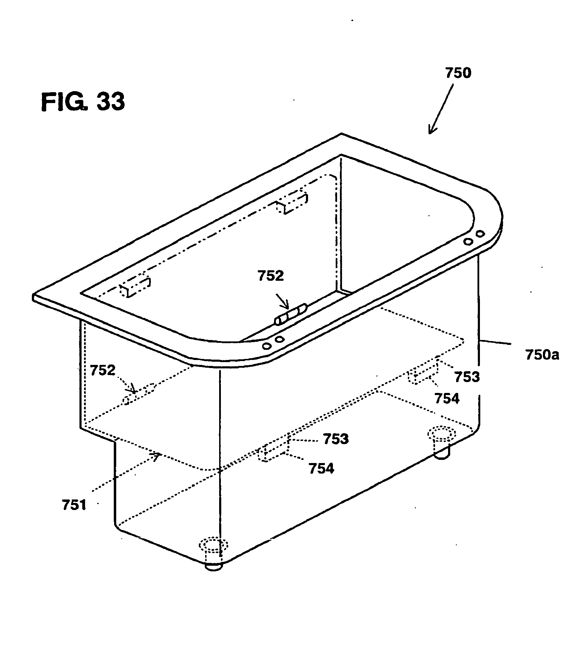

A seventh embodiment will be described referring to FIGS. **32** and **33****.** In a vehicle **701** of the seventh embodiment, as shown in FIGS. **32** and **33****,** at a storage-container member **750** which forms the storage portion of a trunk room **706** is provided a lid **751** which partitions an inside space of the member **750** into an upper-portion-side space **X2** and a bottom-portion-side space **X1.** The lid **751** is preferably supported at a front wall portion of a body portion **750a** so as to rotate around its front end portion via a hinge **752.** Further, a lid-side engagement member **753** and a storage-container-member-side engagement member **754** which engage with each other are preferably provided at a rear end portion of the lid **751** and a rear wall portion of the body portion **750a** of the storage-container member **750.** Thereby, the lid **751** is configured to be held substantially horizontally and locked.

According to the seventh embodiment, any thing which requires its privacy may be stored in the space **X1** of the bottom side, so that the thing can be prevented from being viewed from the outside by the lid **751** even when the trunk lid **751** is open, thereby protecting the privacy of the thing. Further, articles stored in the space **X1** can be prevented from being scattered in the air while the vehicle travels with the trunk lid **751** open.

### EMBODIMENT 8

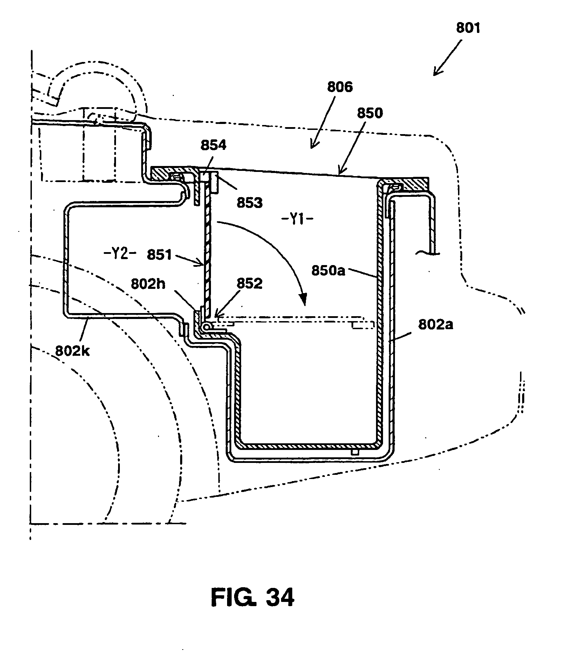

An eighth embodiment will be described. In a vehicle **801** of the eighth embodiment, as shown in FIG. **34****,** an opening **802h** is formed at a front wall portion of a recess portion **802a** of a trunk room **806,** and a boxy member **802k** which opens rearward is provided in front of the opening **802h,** so that a front space **Y2** is formed in front of a baggage-storage space **Y1** of the storage-container member **850.**

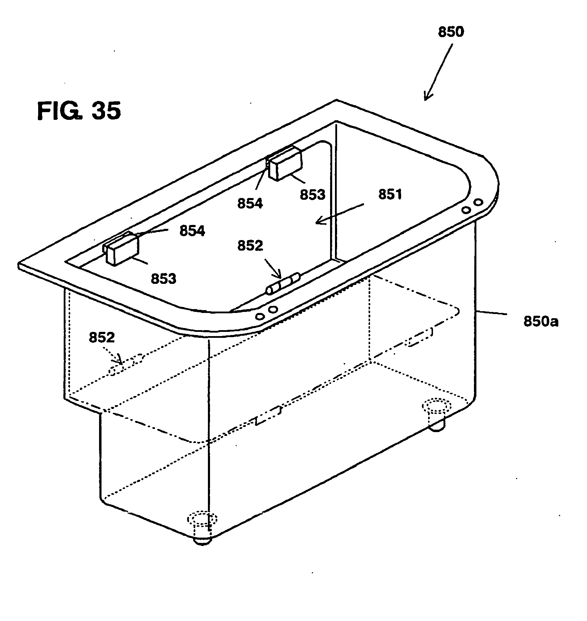

Further, as shown in FIGS. **34** and **35****,** at the storage-container member **850** is preferably provided a lid **851** which partitions the front space **Y2** from the inside space **Y1** of the storage-container member **850.** The lid **851** is supported at a lower edge portion of the opening **802h** of the front wall portion of the body portion **850a** of the storage-container member **850** via a hinge **852 at** its lower end portion so at to rotate. Further, a lid-side engagement member **853** and a storage-container-member-side engagement member **854** which engage with each other are provided at a rear end portion of the lid **851** and a rear wall portion of the body portion **850a** of the storage-container member **850.** Thereby, the lid **851** is configured to be held substantially horizontally and locked.

According to the eighth embodiment, any thing which requires its privacy may be stored in the front space **Y2,** so that the thing can be prevented from being viewed from the outside by the lid even when the trunk lid **851** is open, thereby protecting the privacy of the thing. Further, articles stored in the front space **Y2** can be prevented from being scattered in the air while the vehicle travels with the trunk lid **851** open.

Although not specifically shown in the drawings, the seventh embodiment can be combined with the eighth embodiment e.g. in such a manner that the storage container member 750, 850 comprises both the front space Y2 and the upper-portion-side space **X2** and the bottom-portion-side space **X1.**

### EMBODIMENT 9

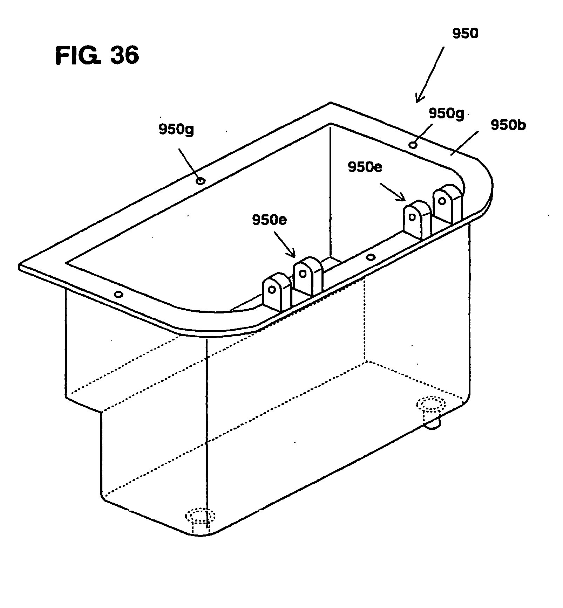

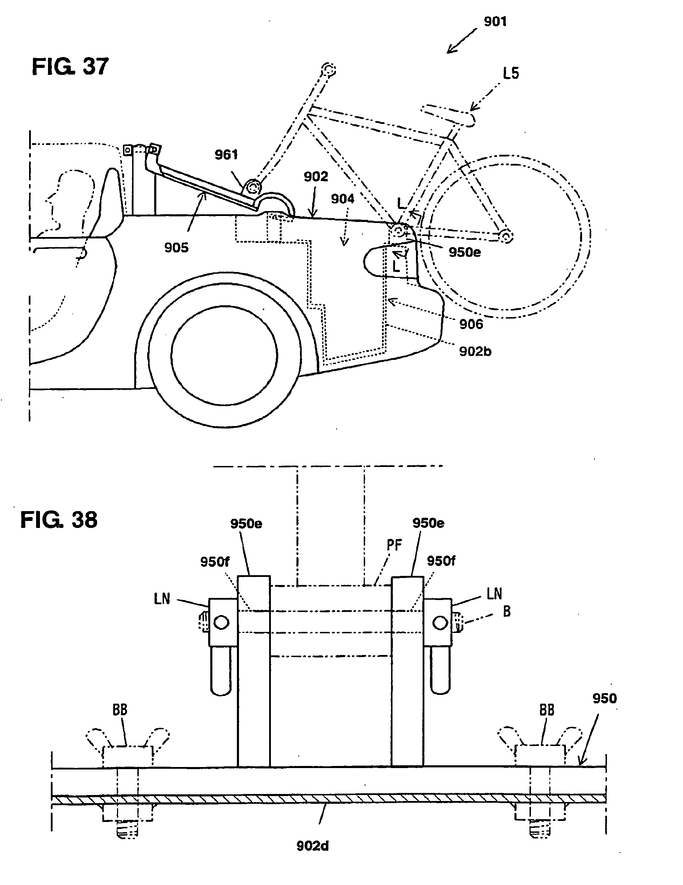

A ninth embodiment will be described referring to FIGS. **36** and **37****.** In a vehicle **901** of the ninth embodiment, as shown in FIG. **36****,** baggage fixing portions **950e, 950e** are formed integrally at a rear side portion of a flange portion **950b** of a storage-container member **950.** At the baggage fixing portion **950e** is formed a bolt hole **950f** like the attachment **61** of the first embodiment. Further, at the flange portion **950** of the storage-container member **950** are formed holes **950g...950g** for bolt fixing to the vehicle body.

Further, as shown in FIG. **37****,** the bicycle **L5** can be loaded with the baggage-fixing portions **950e** and the attachment. Herein, in case of loading it, the flange portion **950b** of the storage-container member **950** are fixed to a vehicle body **902** with bolts inserting into the holes **950g...950g,** so that it can be prevented that the storage-container member **950** inclines or gets out of a recess portion **902b.** Then, the front portion of the bicycle **L5** is fixed to the back face of the trunk lid **905** with the attachment. This fixing may be properly achieved in the same manner as the first embodiment. Meanwhile, a pedal journal portion **PF** of the bicycle is fixed to the baggage-fixing portions **950e** of the storage-container member **950.** Specifically, as shown in FIG. **37****,** by inserting a bolt **B** into the bolt holes **950f** of the baggage-fixing portions **950e** and the pedal journal portion **PF** of the bicycle **L5** and applying nuts with handle **LN, LN,** the bicycle **L5** is fixed to the baggage-fixing portions **950e.**

According to the ninth embodiment, the similar advantages to the first embodiment can be provided, reducing the number of attachments prepared. Further, the operation of attaching or removing the attachment can be properly omitted.

Although not specifically shown in the drawings, the ninth embodiment can be combined with the seventh embodiment and eighth embodiment e.g. in such a manner that the storage container member 750, 850 comprises one or both the front space Y2 and the upper-portion-side space **X2** and the bottom-portion-side space **X1.**

The present invention should not be limited to the above-described embodiments, and any other modifications and improvements may be applied within the scope of the present invention, as defined by the appended claims.

## Claims

1. A baggage compartment structure of a vehicle **(1; 101; 201; 301; 401; 701; 801; 901)**, which comprises a trunk room **(6; 106; 206; 306; 406; 706; 806; 906)** having an opening **(4; 104; 204; 304; 404; 904)** formed at an upper face thereof and configured to be closed with a trunk lid **(5; 105; 205; 305; 405; 905)**, wherein said trunk lid **(5; 105; 205; 305; 405; 905)** is provided so as to rotate around an end portion thereof in such a manner that a back face thereof in an open state faces substantially upward,
**characterized in that**
a baggage fixing means **(61, 62; 70)** is provided and is operative to fix a baggage in such a manner that a space above said trunk lid **(5; 105; 205; 305; 405)**, which is positioned in a specified open state by means of a support means **(20; 120)** operative to support the trunk lid **(5; 105; 205; 305; 405; 905)** in the open state, and said opening **(4; 104; 204; 304; 404)** of the trunk room **(6; 106; 206; 306; 406; 706; 806)** are used as a loading space of the baggage.

2. The baggage compartment structure of a vehicle **(1; 101; 201; 301; 401; 701; 801)** of claim 1, wherein said baggage fixing means **(61, 62; 70)** is fixedly or detachably provided at a specified position which enables the baggage fixing means **(61, 62; 70)** to be located inside the trunk room **(6; 106; 206; 306; 406; 706; 806)** when the opening **(4; 104; 204; 304; 404)** of the trunk room **(6; 106; 206; 306; 406; 706; 806)** is closed with the trunk lid **(5; 105; 205; 305; 405)**.

3. The baggage compartment structure of a vehicle **(1; 101; 201; 301; 401; 701; 801; 901)** of any one or more of the preceding claims, wherein a storage portion of the trunk room **(6; 106; 206; 306; 406; 706; 806; 906)** is comprised of a watertight storage-container member **(50; 500; 750; 850; 950)** with water-resisting qualities, wherein preferably a drain member **(50d; 500d)** to drain a liquid staying in the storage-container member **(50; 500; 750; 850; 950)** is provided at the storage-container member **(50; 500; 750; 850; 950)**.

4. The baggage compartment structure of a vehicle **(1; 101; 201; 301; 401; 701; 801; 901)** of claim 3, wherein said storage-container member **(50; 500; 750; 850; 950)** is so deep that a bottom thereof is located close to a lower face portion of the vehicle body **(2; 102; 202; 302; 402; 902)**.

5. The baggage compartment structure of a vehicle **(701; 801)** of any one of claims 3 through 4, wherein a lid **(751; 851)** to partition an inside space of the storage-container member **(750; 850)** into an upper side **(X2)** and a bottom side **(X1)** is provided at the storage-container member **(750; 850)**.

6. The baggage compartment structure of a vehicle **(801)** of any one of claims 3 through 5, wherein a front space **(Y2)** to store a baggage therein is provided at a front portion of the storage-container member **(850),** and a lid **(851)** to partition said front space **(Y2)** from an inside space **(Y1)** of the storage-container member **(850)** is provided at the storage-container member **(850).**

7. The baggage compartment structure of a vehicle **(1)** of any one of claims 3 through 6, wherein at said storage-container member **(500)** is provided a deformation promoting means **(500e)** operative to promote deformation of the storage-container member **(500)** substantially in a longitudinal direction of the vehicle body **(2)** when a specified load is applied to the storage-container member **(500)** substantially in the longitudinal direction of the vehicle body **(2),** wherein said storage-container member **(500)** is preferably made from resin.

8. The baggage compartment structure of a vehicle **(1)** of claim 7, wherein said deformation promoting means **(500e)** is configured to deform in a bellows shape in the longitudinal direction of the vehicle body **(2)** when the specified load is applied to the storage-container member **(500)** substantially in the longitudinal direction of the vehicle body **(2).**

9. The baggage compartment structure of a vehicle **(1)** of any one of claims 3 through 8, wherein said storage-container member **(500)** is inserted into a recess portion **(2b)** which is provided at the vehicle body **(2)** from above, engagement portions **(500g, 20e)** which engage with each other are preferably provided at the storage-container member **(500)** and the vehicle body **(2),** and at the storage-container member **(500)** is preferably provided an engagement releasing means **(500i)** operative to release an engagement of said engagement portions **(500g, 20e)** with a manual operation.

10. A vehicle comprising a baggage compartment structure of any one or more of the preceding claims, wherein the vehicle **(1; 101; 201; 301; 401; 701; 801; 901)** is an open-top type of vehicle, in which an upper portion above a vehicle compartment **(3)** which is formed in front of the trunk room **(6; 106; 206; 306; 406; 706; 806; 906)** is configured to be opened, and said support means **(20; 120)** is preferably configured to support the trunk lid **(5; 105; 205; 305; 405; 905)** in such a manner that an upper end of the trunk lid **(5; 105; 205; 305; 405; 905)** in the open state is positioned at a level which is higher than a head of a passenger who is seated in the vehicle compartment **(3).**

11. The vehicle **(201; 301)** of claim 10, wherein the trunk lid **(205; 305)** in the open state is configured to constitute an aero-board operative to restrain a traveling wind from flowing into the vehicle compartment **(3).**

12. The vehicle **(401)** of claims 10 or 11, wherein a roll bar **(408)** is provided between the vehicle compartment **(3)** and the trunk lid **(405),** and an interference-preventing portion **(405e)** operative to prevent interference of the trunk lid **(405)** in the open state with the roll bar **(408)** is provided at the trunk lid **(405).**

13. A method of forming a baggage compartment structure of a vehicle **(1; 101; 201; 301; 401; 701; 801; 901)** comprising the steps of:
providing a trunk room **(6; 106; 206; 306; 406; 706; 806; 906)** having an opening **(4; 104; 204; 304; 404; 904)** formed at an upper face thereof and configured to be closed with a trunk lid **(5; 105; 205; 305; 405; 905),** and
forming said trunk lid **(5; 105; 205; 305; 405; 905)** such that it can rotate around an end portion thereof in such a manner that a back face thereof in an open state faces substantially upward,
**characterized by**
providing a baggage fixing means **(61, 62; 70)** operative to fix a baggage in such a manner that a space above said trunk lid **(5; 105; 205; 305; 405)** which is positioned in a specified open state and by means of a support means **(20; 120)** operative to support the trunk lid **(5; 105; 205; 305; 405; 905)** in the open state and said opening **(4; 104; 204; 304; 404)** of the trunk room **(6; 106; 206; 306; 406; 706; 806)** is used as a loading space of the baggage.

14. A method of forming a baggage compartment structure of claim 13, further comprising the step of:
fixedly or detachably providing said baggage fixing means **(61, 62; 70)** at a specified position which enables the baggage fixing means **(61, 62; 70)** to be located inside the trunk room **(6; 106; 206; 306; 406; 706; 806)** when the opening **(4; 104; 204; 304; 404)** of the trunk room **(6; 106; 206; 306; 406; 706; 806)** is closed with the trunk lid **(5; 105; 205; 305; 405)**.

15. A method of forming a baggage compartment structure of claim 13 or 14, further comprising the step of:
providing, in a storage portion of the trunk room **(6; 106; 206; 306; 406; 706; 806; 906),** a watertight storage-container member **(50; 500; 750; 850; 950)** with water-resisting qualities, wherein preferably a drain member **(50d; 500d)** to drain a liquid staying in the storage-container member **(50; 500; 750; 850; 950)** is provided at the storage-container member **(50; 500; 750; 850; 950)**.

## Patentansprüche

1. Eine Gepäckraumstruktur eines Fahrzeugs (1; 101; 201; 301; 401; 701; 801; 901), die einen Kofferraum (6; 106; 206; 306; 406; 706; 806; 906) umfasst, der eine Öffnung (4; 104; 204; 304; 404; 904) aufweist, die an seiner Oberseite gebildet wird und die dazu eingerichtet ist durch einen Kofferraumdeckel (5; 105; 205; 305; 405; 905) geschlossen zu werden, wobei der genannte Kofferraumdeckel (5; 105; 205; 305; 405; 905) so vorgesehen ist, dass er sich um einen seiner Endabschnitte derart drehen kann, dass seine Rückseite im offenen Zustand im Wesentlichen nach oben weist,
**dadurch gekennzeichnet, dass**
ein Gepäckbefestigungsmittel (61, 62; 70) bereitgestellt wird und dazu geeignet ist, ein Gepäck derart zu befestigen, dass ein Raum oberhalb des genannten Kofferraumdeckels (5; 105; 205; 305; 405), der sich in einem bestimmten offenen Zustand befindet, durch ein Stützmittel (20; 120), das dazu geeignet ist, den Kofferraumdeckel (5; 105; 205; 305; 405; 905) im offenen Zustand zu stützen, und die genannte Öffnung (4; 104; 204; 304; 404) des Kofferraums (6; 106; 206; 306; 406; 706; 806) als Laderaum für Gepäck verwendet werden.

2. Die Gepäckraumstruktur eines Fahrzeugs (1; 101; 201; 301; 401; 701; 801) nach Anspruch 1, wobei das genannte Gepäckbefestigungsmittel (61, 62; 70) fest oder lösbar an einer bestimmten Stelle bereitgestellt wird, welche es dem Gepäckbefestigungsmittel (61, 62; 70) ermöglicht, sich innerhalb des Kofferraums (6; 106; 206; 306; 406; 706; 806) zu befinden, wenn die Öffnung (4; 104; 204; 304; 404) des Kofferraums (6; 106; 206; 306; 406; 706; 806) durch den Kofferraumdeckel (5; 105; 205; 305; 405) geschlossen ist.

3. Die Gepäckraumstruktur eines Fahrzeugs (1; 101; 201; 301; 401; 701; 801; 901) nach einem oder mehreren der vorhergehenden Ansprüche, wobei ein Aufbewahrungsbereich des Kofferraums (6; 106; 206; 306; 406; 706; 806; 906) ein wasserdichtes Aufbewahrungsbehälterglied (50; 500; 750; 850; 950) mit Befähigungen zur Wasserbeständigkeit umfasst, wobei, zur Ableitung einer Flüssigkeit, die sich im Aufbewahrungsbehälterglied (50; 500; 750; 850; 950) befindet, vorzugsweise ein Entwässerungsglied *(drain member)* (50d; 500d) am Aufbewahrungsbehälterglied (50; 500; 750; 850; 950) bereitgestellt wird.

4. Die Gepäckraumstruktur eines Fahrzeugs (1; 101; 201; 301; 401; 701; 801; 901) nach Anspruch 3, wobei das genannte Aufbewahrungsbehälterglied (50; 500; 750; 850; 950) so tief ist, dass sich dessen Boden in der Nähe eines unterseitigen Bereichs des Fahrzeugkörpers (2; 102; 202; 302; 402; 902) befindet.

5. Die Gepäckraumstruktur eines Fahrzeugs (701; 801) nach einem der Ansprüche von 3 bis 4, wobei eine Klappe (lid) (751; 851), zur Aufteilung eines Innenraums des Aufbewahrungsbehälterglieds (750; 850) in eine obere Seite (X2) und eine untere Seite (X1), am Aufbewahrungsbehälterglied (750; 850) bereitgestellt wird.

6. Die Gepäckraumstruktur eines Fahrzeugs (801) nach einem der Ansprüche von 3 bis 5, wobei ein vorderer Raum (Y2) zur Aufbewahrung eines Gepäcks in einem vorderen Bereich des Aufbewahrungsbehälterglieds (850) bereitgestellt wird, und wobei eine Klappe (851) am Aufbewahrungsbehälterglied (850) bereitgestellt wird, um den genannten vorderen Raum (Y2) von einem inneren Raum (Y1) des Aufbewahrungsbehälterglieds (850) abzutrennen.

7. Die Gepäckraumstruktur eines Fahrzeugs (1) nach einem der Ansprüche von 3 bis 6, wobei beim genannten Aufbewahrungsbehälterglied (500) ein verformungsförderndes Mittel (500e) bereitgestellt wird, dass dazu geeignet ist, eine Verformung des Aufbewahrungsbehälterglied (500) im Wesentlichen in einer Längsrichtung des Fahrzeugkörpers (2) zu fördern, wenn das Aufbewahrungsbehälterglied (500) einer bestimmten Belastung im Wesentlichen in Längsrichtung des Fahrzeugkörpers (2) ausgesetzt wird, wobei das genannte Aufbewahrungsbehälterglied (500) vorzugsweise aus Harz hergestellt wird.

8. Die Gepäckraumstruktur eines Fahrzeugs (1) nach Anspruch 7, wobei das genannte verformungsfördernde Mittel (500e) dazu geeignet ist, sich in Längsrichtung des Fahrzeugkörpers (2) balgenförmig zu deformieren, wenn das Aufbewahrungsbehälterglied (500) einer bestimmten Belastung im Wesentlichen in Längsrichtung des Fahrzeugkörpers (2) ausgesetzt wird.

9. Die Gepäckraumstruktur eines Fahrzeugs (1) nach einem der Ansprüche von 3 bis 8, wobei das genannte Aufbewahrungsbehälterglied (500) in einen am Fahrzeugkörper (2) bereitgestellten Vertiefungsbereich (2b) von oben her eingesetzt wird, wobei Eingriffsbereiche (500g, 20e), die ineinander eingreifen, vorzugsweise am Aufbewahrungsbehälterglied (500) und am Fahrzeugkörper (2) bereitgestellt werden, und wobei am Aufbewahrungsbehälterglied (500) vorzugsweise ein Eingriffsfreigabemittel (500i) bereitgestellt wird, das dazu geeignet ist, einen Eingriff der genannten Eingriffsbereiche (500g, 20e) durch einen manuellen Vorgang zu lösen.

10. Ein Fahrzeug, das eine Gepäckraumstruktur nach einem oder mehreren der vorhergehenden Ansprüchen umfasst, wobei das Fahrzeug (1; 101; 201; 301; 401; 701; 801; 901) ein Cabrioletartiges Fahrzeug ist, in dem ein oberer Bereich, oberhalb eines Fahrgastraums (*vehicle compartment*) (3), der dem Kofferraum (6; 106; 206; 306; 406; 706; 806; 906) vorgelagert ist, dazu konfiguriert ist geöffnet zu werden, und das genannte Stützmittel (20; 120) vorzugsweise dazu konfiguriert ist den Kofferraumdeckel (5; 105; 205; 305; 405; 905) derart zu stützen, dass ein oberes Ende des Kofferraumdeckels (5; 105; 205; 305; 405; 905) im offenen Zustand auf einem Niveau angeordnet ist, das höher liegt als der Kopf eines Fahrgastes, der im Fahrgastraum (3) sitzt.

11. Das Fahrzeug (201; 301) nach Anspruch 10, wobei der Kofferraumdeckel (205; 305) im offenen Zustand dazu konfiguriert ist ein *aero-board* zu bilden, das dazu geeignet ist, einen Fahrtwind daran zu hindern, in den Fahrgastraum (3) zu strömen.

12. Das Fahrzeug (401) nach den Ansprüchen 10 oder 11, wobei ein Überrollbügel (408) zwischen dem Fahrgastraum (3) und dem Kofferraumdeckel (405) bereitgestellt wird, und wobei ein behinderungsverhindernder Bereich (405e) am Kofferraumdeckel (405) bereitgestellt wird, der dazu geeignet ist, eine unerwünschte Wechselwirkung *(interference)* zwischen dem Kofferraumdeckel (405) im offenen Zustand und dem Überrollbügel (408) zu verhindern.

13. Ein Verfahren zur Bildung einer Gepäckraumstruktur eines Fahrzeugs (1; 101; 201; 301; 401; 701; 801; 901), das die folgenden Schritte umfasst:
die Bereitstellung eines Kofferraums (6; 106; 206; 306; 406; 706; 806; 906), der eine Öffnung (4; 104; 204; 304; 404; 904) aufweist, die an einer Oberseite davon gebildet wird und die dazu konfiguriert ist, durch einen Kofferraumdeckel (5; 105; 205; 305; 405; 905) geschlossen zu werden, und
die Bildung des genannten Kofferraumdeckels (5; 105; 205; 305; 405; 905), derart, dass er um einen seiner Endabschnitte derart drehen kann, dass seine Rückseite im offenen Zustand im Wesentlichen nach oben weist,
**gekennzeichnet durch**
die Bereitstellung eines Gepäckbefestigungsmittel (61, 62; 70), das dazu geeignet ist, ein Gepäck derart zu befestigen, dass ein Raum oberhalb des genannten Kofferraumdeckels (5; 105; 205; 305; 405), der sich in einem bestimmten offenen Zustand befindet und **durch** ein Stützmittel (20; 120) dazu geeignet ist, den Kofferraumdeckel (5; 105; 205; 305; 405; 905) im offenen Zustand zu stützen, und die genannte Öffnung (4; 104; 204; 304; 404) des Kofferraums (6; 106; 206; 306; 406; 706; 806) als Laderaum für Gepäck verwendet werden.

14. Ein Verfahren zur Bildung einer Gepäckraumstruktur nach Anspruch 13, das des Weiteren die folgenden Schritte umfasst:
die Bereitstellung auf feste oder lösbare Art des genannten Gepäckbefestigungsmittel (61, 62; 70) an einer bestimmten Stelle, welche es dem Gepäckbefestigungsmittel (61, 62; 70) ermöglicht, sich innerhalb des Kofferraums (6; 106; 206; 306; 406; 706; 806) zu befinden, wenn die Öffnung (4; 104; 204; 304; 404) des Kofferraums (6; 106; 206; 306; 406; 706; 806) durch den Kofferraumdeckel (5; 105; 205; 305; 405) geschlossen ist.

15. Ein Verfahren zur Bildung einer Gepäckraumstruktur nach Anspruch 13 oder 14, das des Weiteren die folgenden Schritte umfasst:
die Bereitstellung in einem Aufbewahrungsbereich des Kofferraums (6; 106; 206; 306; 406; 706; 806; 906) eines wasserdichten Aufbewahrungsbehältergliedes (50; 500; 750; 850; 950) mit Befähigungen zur Wasserbeständigkeit, wobei, zur Ableitung einer Flüssigkeit, die sich im Aufbewahrungsbehälterglied (50; 500; 750; 850; 950) befindet, vorzugsweise ein Entwässerungsglied (*drain member*) (50d; 500d) am Aufbewahrungsbehälterglied (50; 500; 750; 850; 950) bereitgestellt wird.

## Revendications

1. Une structure de compartiment à bagages d'un véhicule (1 ; 101 ; 201 ; 301 ; 401 ; 701 ; 801 ; 901), qui comprend un espace de malle (6 ; 106 ; 206 ; 306 ; 406 ; 706 ; 806 ; 906) présentant une ouverture (4 ; 104 ; 204 ; 304 ; 404 ; 904) constituée à la face supérieure de celui-ci et configurée de manière à être fermée au moyen d'un couvercle de malle (5 ; 105 ; 205 ; 305 ; 405 ; 905), sachant que le dit couvercle de malle (5 ; 105 ; 205 ; 305 ; 405 ; 905) est prévu de façon à tourner autour d'une section terminale de celui-ci de manière qu'une face arrière de celui-ci en état ouvert soit orientée essentiellement vers le haut,
**caractérisé en ce que**
un moyen de fixation de bagage (61, 62 ;70) est prévu et qu'il est capable de fixer un bagage de manière qu'un espace au-dessus du dit couvercle de malle (5 ; 105 ; 205 ; 305 ; 405), qui est positionné dans un état d'ouverture spécifique au moyen d'un moyen de support (20 ; 120) capable de soutenir le couvercle de malle (5 ; 105 ; 205 ; 305 ; 405 ; 905) dans un état ouvert, et la dite ouverture (4 ; 104 ; 204 ; 304 ; 404) de l'espace de malle (6 ; 106 ; 206 ; 306 ; 406 ; 706 ; 806) sont utilisés en tant qu'espace de chargement pour le bagage.

2. La structure de compartiment à bagages d'un véhicule (1 ; 101 ; 201 ; 301 ; 401 ; 701 ; 801) d'après la revendication 1, sachant que le dit moyen de fixation de bagage (61, 62 ;70) est prévu de manière fixe ou de manière détachable dans une position spécifique qui permet au moyen de fixation de bagage (61, 62 ;70) d'être situé à l'intérieur de l'espace de malle (6 ; 106 ; 206 ; 306 ; 406 ; 706 ; 806) quand l'ouverture (4 ; 104 ; 204 ; 304 ; 404) de l'espace de malle (6 ; 106 ; 206 ; 306 ; 406 ; 706 ; 806) est fermée au moyen du couvercle de malle (5 ; 105 ; 205 ; 305 ; 405).

3. La structure de compartiment à bagages d'un véhicule (1 ; 101 ; 201 ; 301 ; 401 ; 701 ; 801 ; 901) d'après une ou plusieurs des revendications précédentes, sachant qu'une section de rangement de l'espace de malle (6 ; 106 ; 206 ; 306 ; 406 ; 706 ; 806 ; 906) comprend une pièce récipient de stockage (*storage-container member*) étanche (50 ; 500 ; 750 ; 850 950) présentant des qualités de résistance à l'eau, sachant que de préférence une pièce de drainage (*drain member*) (50d ; 500d) est fournie auprès de la pièce récipient de stockage (50 ; 500 ; 750 ; 850 ; 950) pour drainer un liquide situé dans la pièce récipient de stockage (50 ; 500 ; 750 ; 850 ; 950).

4. La structure de compartiment à bagages d'un véhicule (1 ; 101 ; 201 ; 301 ; 401 ; 701 ; 801 ; 901) d'après la revendication 3, sachant que la dite pièce récipient de stockage (50 ; 500 ; 750 ; 850 ; 950) est si profonde qu'un fond de celle-ci se trouve à proximité d'une section de face inférieure du corps de véhicule (2 ; 120 ; 202 : 302 ; 402 ; 902).

5. La structure de compartiment à bagages d'un véhicule (701 ; 801) d'après une des revendications de 3 à 4, sachant qu'un couvercle (751 ; 851) pour diviser un espace intérieur de la pièce récipient de stockage (750 ; 850) en une partie supérieure (X2) et une partie inférieure (X1) est prévu auprès de la pièce récipient de stockage (750 ; 850).

6. La structure de compartiment à bagages d'un véhicule (801) d'après une des revendications de 3 à 5, sachant qu'un espace frontal (Y2) pour le stockage d'un bagage à l'intérieur est prévu auprès d'une section frontale de la pièce récipient de stockage (850), et sachant qu'un couvercle (851) pour diviser le dit espace frontal (Y2) d'un espace intérieur (Y1) de la pièce récipient de stockage (850) est prévu auprès de la pièce récipient de stockage (850).

7. La structure de compartiment à bagages d'un véhicule (1) d'après une des revendications de 3 à 6, sachant qu'auprès de la pièce récipient de stockage (500) on prévoit un moyen favorisant la déformation (500e) capable de favoriser la déformation de la pièce récipient de stockage (500) essentiellement dans une direction longitudinale du corps de véhicule (2) quand une charge spécifiée est appliquée à la pièce récipient de stockage (500) essentiellement dans une direction longitudinale du corps de véhicule (2), sachant que la pièce récipient de stockage (500) est préférablement fabriquée en résine.

8. La structure de compartiment à bagages d'un véhicule (1) d'après la revendication 7, sachant que le dit moyen favorisant la déformation (500e) est configuré de manière à se déformer sous forme de soufflet en direction longitudinale du corps de véhicule (2) quand la charge spécifiée est appliquée à la pièce récipient de stockage (500) essentiellement dans une direction longitudinale du corps de véhicule (2).

9. La structure de compartiment à bagages d'un véhicule (1) d'après une des revendications de 3 à 8, sachant que la dite pièce récipient de stockage (500) est insérée d'en haut dans une section en retrait (2b) prévue au corps de véhicule (2), que des sections d'engagement (500g, 20e) qui s'engagent l'une avec l'autre sont préférablement prévues auprès de la pièce récipient de stockage (500) et du corps de véhicule (2), et qu'auprès de la pièce récipient de stockage (500) on prévoit de préférence un moyen de désengagement (500i) capable de relâcher un engagement des dites sections d'engagement (500g, 20e) par une opération manuelle.

10. Un véhicule comprenant une structure de compartiment à bagages d'après une ou plusieurs des revendications précédentes, sachant qu'un véhicule (1 ; 101 ; 201 ; 301 ; 401 ; 701 ; 801 ; 901) est un véhicule du genre découvert ou à toit ouvert, dans lequel une section supérieure au-dessus de l'habitacle de véhicule (3), qui est formée devant l'espace de malle (6 ; 106 ; 206 ; 306 ; 406 ; 706 ; 806 ; 906), est configurée de manière à pouvoir être ouverte, et que le dit moyen de support (20 ; 120) est préférablement configuré de manière à soutenir le couvercle de malle (5 ; 105 ; 205 ; 305 ; 405 ; 905) de telle façon, qu'une extrémité supérieure du couvercle de malle (5 ; 105 ; 205 ; 305 ; 405 ; 905) en état ouvert se trouve à un niveau plus haut que la tête d'un passager assis dans l'habitacle de véhicule (3).

11. Le véhicule (201 ; 301) d'après la revendication 10, sachant que le couvercle de malle (205 ; 305) en état ouvert est configuré de manière à constituer un *aero-board* capable d'empêcher le vent créé par le déplacement (*traveling wind*) à s'écouler à l'intérieur de l'habitacle de véhicule (3).

12. Le véhicule (401) d'après la revendication 10 ou 11, sachant qu'un arceau de sécurité (408) est prévu entre l'habitacle de véhicule (3) et le couvercle de malle (405), et qu'une section empêchant des interactions indésirables (405e) capable d'empêcher des interactions indésirables entre le couvercle de malle (405) en état ouvert et l'arceau (408) est prévue auprès du couvercle de malle (405).

13. Un procédé de constitution d'une structure de compartiment à bagages d'un véhicule (1 ; 101 ; 201 ; 301 ; 401 ; 701 ; 801 ; 901) comprenant les étapes suivantes :
fournir un espace de malle (6 ; 106 ; 206 ; 306 ; 406 ; 706 ; 806 ; 906) présentant une ouverture (4 ; 104 ; 204 ; 304 ; 404 ; 904) constituée à une face supérieure de celui-ci et configurée de manière à être fermée au moyen d'un couvercle de malle (5 ; 105 ; 205 ; 305 ; 405 ; 905), et
constituer le dit couvercle de malle (5 ; 105 ; 205 ; 305 ; 405 ; 905) de façon qu'il puisse tourner autour d'une section terminale de celui-ci de manière qu'une face arrière de celui-ci en état ouvert soit orientée essentiellement vers le haut,
**caractérisé par**
le fait de fournir un moyen de fixation de bagage (61, 62 ;70) capable de fixer un bagage, de manière qu'un espace au-dessus du dit couvercle de malle (5 ; 105 ; 205 ; 305 ; 405), qui est positionné dans un état d'ouverture spécifique et par un moyen de support (20 ; 120) capable de soutenir le couvercle de malle (5 ; 105 ; 205 ; 305 ; 405 ; 905) dans un état ouvert, et la dite ouverture (4 ; 104 ; 204 ; 304 ; 404) de l'espace de malle (6 ; 106 ; 206 ; 306 ; 406 ; 706 ; 806) soient utilisés en tant qu'espace de chargement pour le bagage.

14. Un procédé de constitution d'une structure de compartiment à bagages d'après la revendication 13, comprenant en outre les étapes suivantes :
fournir le dit moyen de fixation de bagage (61, 62 ;70) de manière fixe ou détachable dans une position spécifique, qui permet au moyen de fixation de bagage (61, 62 ;70) d'être situé à l'intérieur de l'espace de malle (6 ; 106 ; 206 ; 306 ; 406 ; 706 ; 806) quand l'ouverture (4 ; 104 ; 204 ; 304 ; 404) de l'espace de malle (6 ; 106 ; 206 ; 306 ; 406 ; 706 ; 806) est fermé au moyen du couvercle de malle (5 ; 105 ; 205 ; 305 ; 405).

15. Un procédé de constitution d'une structure de compartiment à bagages d'après la revendication 13 ou 14, comprenant en outre les étapes suivantes :
fournir dans une section de rangement de l'espace de malle (6 ; 106 ; 206 ; 306 ; 406 ; 706 ; 806 ; 906) une pièce récipient de stockage étanche (50 ; 500 ; 750 ; 850 ; 950) présentant des qualités de résistance à l'eau, sachant que de préférence une pièce de drainage (50d ; 500d) est fournie auprès de la pièce récipient de stockage (50 ; 500 ; 750 ; 850 ; 950) pour drainer un liquide situé dans la pièce récipient de stockage (50 ; 500 ; 750 ; 850 ; 950).
